# EUROPÄISCHE PATENTSCHRIFT

(11) **EP 3 048 922 B1**
(45) Veröffentlichungstag und Bekanntmachung des Hinweises auf die Patenterteilung: **22.11.2017**
(21) Anmeldenummer: 14766499.9
(22) Anmeldetag: 17.09.2014
(51) Int. Cl.: A45B 9/00, A63C 11/22, F16B 7/18, F16B 7/14

(54) **LÄNGENVERSTELLBARER STOCK UND KLEMMVORRICHTUNG DAFÜR**
LENGTH-ADJUSTABLE POLE AND CLAMPING APPARATUS THEREFOR
CANNE RÉGLABLE EN LONGUEUR ET DISPOSITIF DE SERRAGE POUR CELLE-CI

(30) Priorität: 27.09.2013 CH 16522013; 08.07.2014 CH 10292014
(43) Veröffentlichungstag der Anmeldung: 03.08.2016
(73) Patentinhaber: Lekisport AG, 6340 Baar (CH)
(72) Erfinder: HEIM, Eberhard, 72669 Unterensingen (DE)
(74) Vertreter: Bremi, Tobias Hans
(86) Internationale Anmeldenummer: PCT/EP2014/069777
(87) Internationale Veröffentlichungsnummer: WO 2015/044012

(56) Entgegenhaltungen:
- DE-U1-202009 008 839

## Beschreibung

### TECHNISCHES GEBIET

Die vorliegende Erfindung betrifft einen längenverstellbaren Stock, insbesondere zur Verwendung als Wanderstock, Trekkingstock, Nordic Walking-Stock, Langlaufstock oder Skistock, sowie eine Klemmvorrichtung zur Festlegung der relativen Position von Rohrabschnitten eines solchen Stockes.

### STAND DER TECHNIK

Um einen Wanderstock, Trekkingstock, Nordic Walking-Stock, Langlaufstock oder Skistock in seiner Länge variabel auszugestalten, wurden Mechanismen entwickelt, die es erlauben, zwei den Stock bildende Rohrabschnitte jeweils den Bedürfnissen entsprechend in ihrer axialen Lage unterschiedlich einzustellen. Dazu werden in der Regel zwei Rohrabschnitte verwendet, welche einen unterschiedlichen Durchmesser aufweisen, so dass das eine Rohr in das andere zur Verstellung eingeschoben werden kann.

Einerseits gibt es zu diesem Zweck Vorrichtungen, bei welchen der Klemmmechanismus gewissermassen im Inneren der den Stock bildenden Rohre angeordnet ist. Aus der EP 1 450 906 ist beispielsweise eine Vorrichtung bekannt, bei welcher ein in einem Innenrohr befestigter und in das Aussenrohr hineinragender Gewindestab vorgesehen ist, auf welchem ein konisch ausgebildetes Innenelement mit einem Innengewinde gelagert ist. Um dieses Innenelement herum ist ein Spreizelement mit einem Gegenkonus angeordnet, welches, wenn das Innenelement in das Spreizelement durch Drehung der beiden Rohrabschnitte hinein getrieben wird, in die beiden Rohrabschnitte festlegender Weise gespreizt wird.

Andererseits gibt es Vorrichtungen, welche auf der Aussenseite, im Sinne einer Schelle, angeordnet sind. So beschreibt beispielsweise die DE 694 017 65 eine Vorrichtung, bei welcher um ein geschlitztes Rohr eine Kunststoff-Manschette sowie ein Klemmhebel angeordnet ist, und bei welcher der Klemmhebel mit einem durch an der Manschette angeordnete Vorsprünge hindurchtretenden Stift umgelegt und damit die Klemmvorrichtung geklemmt werden kann. Bei dieser Konstruktion wird also das innen liegende Rohr nicht direkt durch die Manschette geklemmt, sondern die Manschette liegt auf dem Aussenrohr auf, das Aussenrohr verfügt über einen Schlitz, und die Klemmvorrichtung presst mit anderen Worten das Aussenrohr an das Innenrohr. Ein weiterer im Wesentlichen baugleicher Klemmmechanismus ist aus der EP 0 988 98 bekannt.

Eine weitere Vorrichtung, welche aussen angeordnet ist, ist aus der EP 1 217 224 bekannt. Hier ist ebenfalls ein Klemmhebel angeordnet, welcher hier aber in einer Kippbewegung um eine Achse senkrecht zur Stockachse umgelegt werden kann, und welcher gewissermassen gabelförmig ausgebildet ist.

Ebenso offenbart die WO 2007/125166 A1 einen aussen liegenden Klemmmechanismus mit einem senkrecht zur Stockachse umlegbaren Klemmhebel.

Das Dokument DE202009008839U1 offenbart den Gegenstand des Oberbegriffs des Anspruchs 1.

### DARSTELLUNG DER ERFINDUNG

Der Erfindung liegt demnach u.a. die Aufgabe zugrunde, eine verbesserte Klemmvorrichtung für die oben angegebenen Zwecke vorzuschlagen. Ziel ist es dabei insbesondere, eine Klemmvorrichtung für einen Wanderstock, Trekkingstock, Nordic Walking-Stock, Langlaufstock oder Skistock zur lösbaren axialen Festlegung eines in eine Öffnung der Klemmvorrichtung einschiebbaren Rohrabschnittes vorzuschlagen, welche eine verbesserte Klemmkraft insbesondere auch unter unterschiedlichen Bedingungen und bei Verwendung von unterschiedlichen Rohren ermöglicht, welche eine leichte relative Verschiebung der Rohre zulässt, welche einfach hergestellt werden kann, und welche möglichst schlank, d.h. hinsichtlich axialer als auch umfangsmässiger Erstreckung, ausgestaltet werden kann.

Die Lösung dieser Aufgabe wird durch eine Klemmvorrichtung nach Anspruch 1 erreicht, also dadurch, dass eine Klemmvorrichtung für einen Wanderstock, Trekkingstock, Nordic Walking-Stock, Langlaufstock oder Skistock zur lösbaren axialen Festlegung eines in eine Öffnung der Klemmvorrichtung einschiebbaren Innenrohrabschnittes zur Verfügung gestellt wird, wobei die Klemmvorrichtung eine Kunststoffmanschette umfasst, welche an einem in eine weitere Öffnung der Klemmvorrichtung einschiebbaren Aussenrohrabschnitt befestigbar ist, den Innenrohrabschnitt wenigstens in einem axialen Abschnitt im Wesentlichen unmittelbar umgreift und im geschlossenen Zustand der Klemmvorrichtung klemmt. Die Kunststoffmanschette weist mindestens einen axialen, den Umfang der Kunststoffmanschette in diesem axialen Abschnitt variabel machenden Schlitz auf. Alternativ oder zusätzlich kann die Kunststoffmanschette, damit sie geklemmt werden kann, wenigstens bereichsweise aus einem verformbaren Elastomermaterial ausgebildet sein. Die Klemmvorrichtung weist ferner eine koaxial zur Kunststoffmanschette angeordnete Klemmschelle auf, welche die Kunststoffmanschette in axialer Richtung wenigstens teilweise umgreift und in einem geschlossenen Zustand klemmt. Die Klemmschelle weist wenigstens in einem die Kunststoffmanschette umgreifenden Bereich wenigstens einen axialen, den Umfang der Klemmschelle in diesem Bereich variabel machenden Schlitz auf, wobei an der Klemmschelle auf einer ersten Seite dieses axialen Schlitzes ein erster Vorsprung und auf einer zweiten Seite dieses axialen Schlitzes ein zweiter Vorsprung angeordnet ist (Verlaufsrichtung der Vorsprünge im Wesentlichen senkrecht zur Achse des Rohrabschnitts). Jeder der Vorsprünge verfügt über eine koaxiale im Wesentlichen senkrecht zur Achse des Innenrohrabschnitts angeordnete Durchtrittsöffnung. An mindestens einem der Vorsprünge ist ein Klemmhebel angeachst, wobei der Klemmhebel einen Hebelarm aufweist, der bei geschlossener Klemmvorrichtung die Klemmschelle wenigstens teilweise umgreift. Der Klemmhebel weist einen um eine Drehachse des Klemmhebels exzentrischen Abrollbereich auf, mittels welchem sich der Abstand zwischen einem Anschlag und einer auf der Außenseite des ersten Vorsprungs angeordneten Gegenfläche zur Klemmung durch Verschwenken des Klemmhebels in die geschlossene Position verringern lässt. Unter exzentrisch ist dabei im Zusammenhang mit dem Abrollbereich zu verstehen, dass der Radius des Abrollbereichs nicht konstant ist um die Drehachse des Hebels, sondern im entscheidenden Abschnitt, das heißt dort wo im Rahmen des Verstellbereichs des Hebels der Abrollbereich auf die Gegenfläche aufliegt, einen sukzessive zunehmenden Radius aufweist. Dies so, dass bei geschlossener Klemmvorrichtung, das heißt bei voll an die Klemmvorrichtung angelegtem Klemmhebel, dieser Radius im Wesentlichen bei seiner Maximalposition ist und damit der Abstand von der Gegenfläche und dem Anschlag einen minimalen Wert annimmt, und bei geöffneter Klemmvorrichtung, das heißt abstehendem Klemmhebel, der Radius einen geringeren Wert hat, so dass der Abstand von der Gegenfläche und dem Anschlag einen größeren Wert annimmt und somit der geschlitzte Bereich der Manschette einen größeren Innendurchmesser aufweist. Abrollfläche und Drehachse des Hebels sind also exzentrisch angeordnet.

Die vorgeschlagene Klemmvorrichtung ist dadurch gekennzeichnet, dass die Kunststoffmanschette aus zwei separaten Bauteilen ausgebildet ist, wovon ein erstes der zwei separaten Bauteile als zur Klemmschelle koaxial angeordnete Rohrhülse zur Befestigung der Klemmvorrichtung an dem Aussenrohrabschnitt ausgebildet ist, und ein zweites der zwei separaten Bauteile als zur Rohrhülse und zur Klemmschelle koaxial angeordnete Spannhülse zur Klemmung des in den Aussenrohrabschnitt einschiebbaren Innenrohrabschnittes ausgebildet ist. Der Aussenrohrabschnitt umhüllt bzw. umgreift in einem Bereich, wo die Rohrhülse den Aussenrohrabschnitt umgreift, ein unteres Ende des Innenrohrabschnitts. Das Außenrohr weist dabei einen Innendurchmesser auf, welcher im Wesentlichen gleich ist oder nur unwesentlich größer als der Außendurchmesser des Innenrohrabschnitts.

Bei der Klemmung wird vorzugsweise der Durchmesser der Spannhülse und gegebenenfalls zusätzlich ein Durchmesser eines verjüngten oberen Abschnittes der Rohrhülse verringert, nicht aber ein Durchmesser des zu klemmenden Innenrohrabschnittes. Das heisst, dass der zu klemmende Innenrohrabschnitt vorzugsweise nicht geschlitzt ist bzw. ungeschlitzt ausgebildet ist. Vorzugsweise ist weder der in die Spannhülse einzuführende und von der Spannhülse zu klemmende Innenrohrabschnitt noch der Aussenrohrabschnitt, an dem die Rohrhülse befestigt wird, geschlitzt ausgebildet. Die Klemmwirkung findet somit vorzugsweise nur über die Spannhülse statt, gegebenenfalls zusätzlich über den oberen Abschnitt der Rohrhülse (sofern dieser geschlitzt ausgebildet ist).

Die Spannhülse weist zum Erreichen der Klemmwirkung wenigstens einen oder wenigstens zwei, vorzugsweise wenigstens drei axial verlaufende Schlitze auf, wobei die Schlitze vorzugsweise gleichmäßig um den Umfang verteilt sind, und sich vorzugsweise nur über einen Teil einer axialen Länge der Kunststoffmanschette erstrecken. Vorzugsweise weist die Spannhülse drei nach oben hin offene axiale Schlitze auf, und vorzugsweise zusätzlich drei nach unten hin offene, axiale Schlitze, wobei die sechs Schlitze vorzugsweise gleichmässig über den Umfang verteilt sind.

Eine besonders bevorzugte Ausführungsform ist dadurch gekennzeichnet, dass die Spannhülse mindestens an einem axialen Ende einen umlaufenden Flansch aufweist, vorzugsweise mindestens einen ersten Flansch an einem oberen, der Rohrhülse abgewandten Ende der Spannhülse aufweist. Insbesondere bevorzugt weist die Spannhülse einen ersten Flansch an ihrem oberen Ende und einen zweiten Flansch an ihrem unteren Ende auf. Dabei weist der obere und/oder der untere Flansch vorzugsweise einen grösseren Aussendurchmesser auf als der (im Falle von zwei Flanschen dazwischen liegende) zylindrische Abschnitt der Spannhülse. Der Flansch kann dabei radial nach innen oder radial nach aussen gerichtet sein. Der obere Flansch des mindestens teilweise von der Klemmschelle umfassten Spannhülse kann über den oberen Rand am oberen, der Rohrhülse abgewandten Ende der Klemmschelle hinausragen und einen oberen axialen Anschlag für das der Rohrhülse abgewandte obere Ende der Klemmschelle bilden. Alternativ dazu kann der umlaufende Flansch aber auch von der Klemmschelle umgriffen werden.

Nach einer weiteren bevorzugten Ausführungsform weist die Rohrhülse mindestens einen vorzugsweise umlaufenden Flansch auf, vorzugsweise an einem oberen Abschnitt der Rohrhülse, vorzugsweise an ihrem oberen, der Spannhülse zugewandten Ende, einen oberen umlaufenden Flansch. Der mindestens eine Flansch der Rohrhülse kann dabei radial nach innen oder radial nach aussen gerichtet sein. Im Falle eines radial nach aussen gerichteten Flansches wird dieser vorzugsweise von der Klemmschelle mindestens teilweise umgriffen wird, bzw. er greift in eine umlaufende Nut an der Innenseite der Klemmschelle ein. Er kann aber auch beispielsweise zwecks formschlüssiger Verdrehsicherung in einen in Umfangsrichtung der Klemmschelle mindestens teilweise umlaufenden Schlitz der Klemmschelle eingreifen. Der Flansch kann aber auch einen unteren Anschlag für die Spannhülse und/oder ein unteres, der Rohrhülse zugewandtes Ende der Klemmschelle bilden.

Zusätzlich oder alternativ dazu kann der Flansch statt am oberen Ende der Rohrhülse so angeordnet sein, dass er zwischen einem unteren zylindrischen Abschnitt grösseren Durchmessers und einem oberen Abschnitt kleineren Durchmessers angeordnet ist.

Nach einer weiteren Ausführungsform verfügt die Klemmschelle in einem der Rohrhülse zugewandten unteren Abschnitt unterhalb des Klemmhebels, besonders bevorzugt unterhalb einer teilweise umlaufenden Durchgangsöffnung wie weiter unten beschrieben, über einen in Umfangsrichtung der Klemmvorrichtung teilweise umlaufenden Schlitz. In diesen Schlitz kann beispielsweise ein unterer Flansch der Spannhülse und/oder ein oberer Flansch der Rohrhülse eingreifen, wie zu einer bevorzugten Ausführungsform weiter unten beschrieben.

Die Klemmvorrichtung kann ein Mittel zur Verdrehsicherung aufweisen, vorzugsweise zwischen der Klemmschelle und der Rohrhülse, um die Rotation der Klemmschelle gegenüber der Rohrhülse zu verhindern. Das Mittel zur Verdrehsicherung ist vorzugsweise in Form eines Formschlusses ausgebildet, z.B. zwischen der Klemmschelle und der Rohrhülse, insbesondere mittels eines Formschlusses zwischen der Klemmschelle und einem mindestens teilweise umlaufenden Flansches der Rohrhülse. Der Formschluss zur Verhinderung einer Rotationsbewegung im Wesentlichen zwischen Rohrhülse und Klemmschelle kann dabei durch geeignete Mittel erreicht werden, z.B. durch eine ineinandergreifende Zahnung, mindestens einen korrespondierenden bzw. komplementären Absatz, eine Stufe, etc. Möglich ist insbesondere bevorzugt wenigstens ein radial nach aussen vorstehender Noppen oder Vorsprung an oder auf der Aussenfläche der Spannhülse, der in eine Ausnehmung oder Vertiefung in der Klemmschelle, z.B. im Bereich, der vom Hebel im geschlossenen Zustand überdeckt wird, eingreift. Gemäss einer besonders bevorzugten Ausführungsform weist die Klemmschelle an ihrem unteren Ende einen Rand auf, der zwei gleichmässig um den Umfang der Klemmschelle angeordnete Absätze bzw. Stufen aufweist. Diese sind komplementär zu zwei korrespondierenden Stufen an einem vorzugsweise umlaufenden Flansch der Rohrhülse ausgebildet, sodass Klemmschelle und Rohrhülse gegeneinander verdrehgesichert sind. Bei dieser Ausführungsform weist die Rohrhülse vorzugsweise einen oberen Abschnitt kleineren Durchmessers auf, der oben an den umlaufenden Flansch anschliesst und eine radiale Rippung bzw. Zahnung zur Steckverbindung mit der Klemmschelle aufweist (oder ein anderes Mittel zur Verbesserung der Verbindung mit einem unteren Abschnitt der Klemmschelle - wobei die Innenseite der Klemmschelle vorzugsweise korrespondierende Komplementärstrukturen aufweist) und geschlitzt ausgebildet ist. Vorteilhafterweise sind die vorzugsweise drei Schlitze in diesem oberen Abschnitt gleichmässig in Umfangsrichtung um den Umfang der Rohrhülse angeordnet und fluchten vorzugsweise mit den Schlitzen der Spannhülse. Im Bereich des axialen Schlitzes der Klemmschelle ist keine Stufung bzw. kein Absatz vorgesehen, um die Klemmwirkung der Klemmschelle nicht zu behindern.

Die Klemmschelle kann an ihrem unteren Ende einen Rand aufweisen, der in axialer Richtung ausgerichtete Zähne bzw. Rippen mit dazwischenliegenden Ausnehmungen aufweist, welche geeignet sind, in korrespondierende Ausnehmungen zwischen entsprechenden axial nach oben, d.h. zur Klemmschelle hin ausgerichteten Zähnen bzw. Rippen am oberen Ende der Rohrhülse einzugreifen. Vorzugsweise sind die Zähne bzw. Rippen in Umfangsrichtung gleichmässig um den Umfang der Klemmschelle bzw. Rohrhülse angeordnet, wobei aber im Bereich des axialen Schlitzes der Klemmschelle vorzugsweise keine Verzahnung vorgesehen ist, um die Klemmwirkung der Klemmschelle nicht zu behindern.

Die nach oben zur Klemmschelle hin gerichteten Zähne bzw. Rippen können eine kleinere Breite aufweisen als die nach unten, d.h. zur Rohrhülse hin gerichteten Zähne bzw. Rippen der Klemmschelle.

Nach einer weiteren Ausführungsform verfügt die Klemmschelle über einen in Umfangsrichtung nicht durchgehenden Schlitz. Dieser Schlitz kann in einem dem axialen Schlitz der Klemmschelle gegenüberliegenden Bereich nicht-umlaufend ausgebildet sein. Somit weist der Schlitz mindestens zwei umfangsseitige Enden auf. In den umfangsseitigen Schlitz greift gemäss dieser bevorzugten Ausführungsform ein unterer, radial nach aussen gerichteter Flansch der Spannhülse ein. Die Klemmschelle kann gegenüber der Spannhülse über eine Verdrehsicherung verfügen, muss aber nicht, wenn die Klemmschelle gegen die Rohrhülse verdrehgesichert angeordnet ist. Ziel ist es, das Verdrehen der Klemmschelle beim Schliessen des Klemmhebels zu vermeiden. Es ist aber auch eine Funktionsanordnung möglich, bei welcher Spannhülse, Klemmschelle und Rohrhülse zusammen oder in Verkettung gegeneinander verdrehgesichert sind. Für die Aufnahme des entstehenden Drehmoments sollte vorzugsweise eine Gegenkraft vorhanden sein, welche am Ende in der Rohrhülse endet. Zudem weist die Rohrhülse einen oberen umlaufenden Flansch auf, der eine axial nach unten, d.h. von der Klemmschelle weg gerichtete Zahnung aufweist. Dieser gezahnte Flansch wird von einem unteren Abschnitt, der vorzugsweise unterhalb eines umlaufenden Schlitzes der Klemmschelle angeordnet ist, der Klemmschelle umgriffen, wobei dieser untere Abschnitt der Klemmschelle (vorzugsweise nur) an seiner Innenseite eine ebenfalls axial nach unten gerichtete Zahnung aufweist. Diese an der Innenseite der Klemmschelle angeordnete Zahnung kann zwecks Klemmung der Zahnung an der Aussenseite der Rohrhülse leicht radial nach innen gebogen sein, sodass die Zähne der Klemmschelle in korrespondierende Ausnehmungen der Rohrhülse eingreifen.

Gemäss einer alternativen Ausführungsform greift nicht nur ein unterer Flansch der Spannhülse in den unvollständig umlaufenden Schlitz der Klemmschelle ein, sondern auch ein oberer umlaufender Flansch der Rohrhülse. Dann weist der umlaufende obere Flansch der Rohrhülse einen in Umfangsrichtung verlaufenden radialen Absatz bzw. eine Ausnehmung auf, welche den Aussendurchmesser des oberen Flansches im Bereich dieser Ausnehmung im Vergleich zum übrigen umlaufenden Bereich des Flansches verkleinert. Der umlaufende Bereich des Flansches greift somit in den die Klemmschelle unvollständig umlaufenden Schlitz ein und findet an den beiden Enden des Bereichs, an dem der umlaufende Schlitz der Klemmschelle nicht umlaufend ausgebildet ist, seinen Anschlag. Dabei greift der dem axialen Schlitz der Klemmschelle gegenüberliegende, nicht umlaufende Bereich des umlaufenden Schlitzes radial in die Ausnehmung des oberen Flansches der Rohrhülse ein.

Da die Verdrehsicherung erfindungsgemäss im Wesentlichen zwischen Klemmschelle und Rohrhülse vorgesehen ist, kann die Spannhülse vorzugsweise trotzdem noch gegenüber der Rohrhülse und/oder gegenüber der Klemmschelle frei drehbar angeordnet sein.

Gemäss einer bevorzugten Ausführungsform kann eine Verdrehsicherung zwischen Spannhülse und Rohrhülse realisiert werden, indem formschlüssige Mittel vorgesehen werden, die insbesondere in Form von am axialen, der Rohrhülse zugewandten Ende der Spannhülse angeformten Rippen oder Zungen ausgebildet sein können. Diese Rippen oder Zungen (es kann sich dabei um eine oder mehrere handeln, z.B. zwei oder drei) können z.B. in radialer Richtung nach aussen gerichtet ausgebildet sein, und in Vertiefungen oder Ausnehmungen in der Innenfläche der Rohrhülse selbsteinrastend eingreifen, Die Nasen können für dieses Selbsteinrasten abgeschrägte Kanten in Einschubrichtung in die Rohrhülse aufweisen. Bevorzugtermassen sind die Vertiefungen oder Ausnehmungen in der Rohrhülse im Bereich des der Spannhülse zugewandten Endes der Rohrhülse vorgesehen. Vorteilhafterweise greifen die Nasen in Durchgangsöffnungen in der Wandung der Rohrhülse ein, damit ein Lösen der Rastverbindung zwischen Spannhülse und Rohrhülse auch nachträglich noch zerstörungsfrei durch Betätigung der Nasen von aussen möglich ist.

Die Art der Verdrehsicherung der Klemmvorrichtung ist nicht auf die hier beschriebenen und in den Figuren dargestellten Ausführungsformen beschränkt und kann weitere geeignete, vorzugsweise formschlüssige, aber durchaus auch kraft- und/oder klebschlüssige Varianten umfassen.

Die Rohrhülse kann in einem auf einem Aussenrohrabschnitt montierten Zustand auf dem Aussenrohrabschnitt kraft- und/oder form- und/oder stoffschlüssig befestigt sein. Vorzugsweise ist die Rohrhülse auf dem Aussenrohrabschnitt aufgepresst. Die Rohrhülse kann aber beispielsweise auch auf dem Aussenrohrabschnitt aufgeklebt oder beispielsweise durch elastisch federnde Bereiche formschlüssig in Ausnehmungen des Aussenrohres verrastet sein.Die Klemmschelle weist vorteilhafterweise eine in Umfangsrichtung der Klemmschelle mindestens teilweise umlaufende, rückseitig zum axialen Schlitz angeordnete Durchgangsöffnung auf, welche bei geschlossener Klemmvorrichtung den Hebelarm in Umfangsrichtung wenigstens abschnittsweise aufnimmt. Das heisst, die Durchgangsöffnung ist vorzugsweise in einem Abschnitt der Klemmschelle angeordnet, wo bei geschlossener Position des Klemmhebels der Klemmhebel die Klemmschelle umgreift.

Alternativ dazu kann die Klemmschelle statt einer Durchgangsöffnung auch eine mindestens teilweise umlaufende, rückseitig zum Schlitz angeordnete Vertiefung aufweisen, welche ebenfalls bei geschlossener Klemmvorrichtung den Hebelarm in Umfangsrichtung wenigstens abschnittsweise aufnimmt.

Durch die koaxiale im Wesentlichen senkrecht zur Achse des Innenrohrabschnitts angeordnete Durchtrittsöffnung in jedem der oben erwähnten Vorsprünge an der Klemmschelle greift vorzugsweise ein Querstift hindurch, welcher an der Außenseite des zweiten Vorsprungs über einen Anschlag verfügt und welcher an der Außenseite des ersten Vorsprungs eine senkrecht zur Achse des Querstifts und parallel zur Achse des Rohrabschnitts angeordnete Drehachse für den Klemmhebel aufweist. Dabei handelt es sich vorzugsweise bei der Durchtrittsöffnung in beiden Vorsprüngen um ein rundum geschlossenes Loch mit bevorzugtermassen einem Durchmesser im Bereich von 2-7 mm. Der Durchmesser des Querstifts im durch diese Durchtrittsöffnungen hindurchtretenden Bereich liegt bevorzugt im Bereich von 2-6 mm.

Der Schlitz zwischen den beiden Vorsprüngen kann entweder als einfacher linearer radialer Schlitz ausgebildet sein, er kann aber auch beispielsweise gekrümmt oder eckig ausgebildet sein oder mehrfache Windungen aufweisen, was zu einer geringeren Schmutzanfälligkeit führt.

Eine weitere bevorzugte Ausführungsform ist dadurch gekennzeichnet, dass der Querstift an seinem Klemmhebel-seitigen Ende T-förmig ausgebildet ist, wobei die seitlichen Arme die Drehachse für den Klemmhebel bilden, der Klemmhebel für den Querstift einen Schlitz aufweist, welcher den Abrollbereich in zwei seitlich des Querstifts angeordnete Abrollbereiche aufteilt.

Der Anschlag ist vorzugsweise verstellbar ausgebildet, d.h. es ist möglich, den minimalen Abstand zwischen Gegenfläche und Anschlag variable den Bedürfnissen angepasst einzustellen, was insbesondere für unterschiedliche Temperaturen, unterschiedliche Klemmkräfte oder insbesondere auch bei Abnutzung von grossem Vorteil ist, da Nacheinstellungen ermöglicht werden. Zudem können so unterschiedliche Rohrdurchmesser, z.B. resultierend aufgrund von Toleranzen oder unterschiedlichen Beschichtungen etc. ausgeglichen werden. Dabei ist der Anschlag vorzugsweise mit einem Gewinde ausgebildet und der Querstift mit einem Gegengewinde, und der Anschlag als Mutter oder Schraube ausgebildet. Der Querstift weist dabei vorzugsweise an seinem dem Klemmhebel zugewandten Ende ein Aussengewinde auf. Vorzugsweise ist der Querstift aus Metall ausgebildet, kann aber auch aus einem hoch stabilen Kunststoffmaterial gefertigt sein (z.B: Glasfaser-verstärkte Materialien oder Kohlenfaser-verstärkte Materialien).

Vorzugsweise weist der Anschlag eine umlaufende Zahnung und/oder einem Kamm und/oder einer Nut für den Eingriff eines Verstellwerkzeugs auf. In einer weiteren bevorzugten Ausführungsform der Klemmvorrichtung ist der Anschlag eine Rändelmutter, wobei vorzugsweise die Rändelmutter einen verjüngten Abschnitt und einen breiten Abschnitt aufweist, wobei der verjüngte Abschnitt in die Durchtrittsöffnung eingreifen kann und wobei der verjüngte Abschnitt vorzugsweise über ein Innengewinde verfügt, welches in Wechselwirkung mit dem Aussengewinde am Gewindeabschnitt des Querstifts treten kann.

Es kann auch vorteilhaft sein, wenn der Querstift an seinem dem Klemmhebel abgewandten Ende über einen abgeflachten Abschnitt verfügt, wobei der abgeflachte Abschnitt vorzugsweise einen abgerundet rechteckig ausgebildeten Querschnitt aufweist, und wobei in dem abgeflachten Abschnitt eine quer, vorzugsweise im Wesentlichen senkrecht zur Hauptverlaufsrichtung des Querstifts, verlaufende Durchtrittsöffnung für den Achsstift angeordnet ist, um welchen der Klemmhebel schwenkbar gelagert ist.

Gemäss einer weiteren bevorzugten Ausführungsform ist die Gegenfläche als ebene Fläche ausgebildet, vorzugsweise als konkave Fläche, deren Krümmungsradius im Wesentlichen dem Krümmungsradius des Abrollbereichs angepasst ist. Eine solche Fläche kann beispielsweise aus Kunststoff ausgebildet sein.

Eine weitere bevorzugte Ausführungsform der Klemmvorrichtung weist eine Gegenfläche in Form eines wenigstens teilweise im ersten Vorsprung in einer Vertiefung angeordneten Metallelements auf.

Das Metallelement kann dabei, gemäss einer vorteilhaften Ausführungsform, insbesondere falls die Klemmschelle aus Kunststoff und nicht aus Metall ausgebildet ist, in Form eines die Klemmschelle auf deren Außenseite auf der den Vorsprüngen gegenüberliegenden Seite umlaufenden, bevorzugtermassen einstückigen, Metallbandes ausgebildet sein, dessen erstes Ende auf der dem Abrollbereich zugewandten Außenseite des ersten Vorsprunges in einer Vertiefung angeordnet ist und eine erste Ausnehmung oder eine Durchgangsöffnung für den Querstift aufweist, dessen Mittelbereich die Klemmschelle umläuft, und dessen zweites Ende auf der dem Anschlag zugewandten Außenseite des zweiten Vorsprunges, bevorzugtermassen in einer Vertiefung, angeordnet ist und eine zweite Ausnehmung oder eine Durchgangsöffnung für den Querstift und/oder ein Anschlagselement aufweist. Weitere Ausführungsformen eines solchen Metallbandes sind in der WO 2010/085905 A1 beschrieben.

Gemäss einer alternativen Ausführungsform ist das Metallelement (kreis-)scheibenförmig ausgebildet und in einer Vertiefung im ersten Vorsprung entlang der Achse des Querstifts verschieblich angeordnet. Dabei ist die Tiefe der Vertiefung größer als die Dicke des Metallelements, wobei vorzugsweise die Dicke des Metallelements im Bereich von 0.5-3mm, vorzugsweise im Bereich von 1-2mm liegt, und die Tiefe der Vertiefung im Bereich von 3-10 mm, vorzugsweise im Bereich von 5-8 mm liegt. Grundsätzlich kann das Metallelement aus Stahl, ganz oder teilweise oder Oberflächen-gehärtetem Stahl gefertigt sein, oder z.B. aus gehärtetem Aluminium, aus Messing, Titan, oder einem anderen Metall. Der Hebelarm umgreift vorzugsweise die Klemmschelle wenigstens teilweise, und ist gemäss einer weiteren bevorzugten Ausführungsform bei geschlossener Klemmvorrichtung wenigstens abschnittsweise in einer Öffnung in der Klemmschelle angeordnet. Alternativ dazu kann für den Hebelarm in der Klemmschelle eine wenigstens teilweise oder auch vollständig umlaufende Vertiefung vorgesehen sein, in welche der Hebelarm wenigstens teilweise zu liegen kommt, wenn die Klemmschelle geschlossen ist. Vorteilhafterweise ist der Hebel aus Metall oder einem stabilen Kunststoff, ggf. faserverstärkt, gefertigt, vorzugsweise ganz oder teilweise aus Oberflächen-gehärtetem Metall, gehärtet insbesondere im Abrollbereich, wobei vorzugsweise angeformte Kunststoffbereiche vorgesehen sind, vorzugsweise aus grifffreundlichem Material.

Vorzugsweise sind sowohl die Rohrhülse als auch die Spannhülse aus Kunststoff ausgebildet, weisen aber eine unterschiedliche Materialzusammensetzung auf. Die Rohrhülse ist dabei vorzugsweise aus einem Material mit teilweise elastischen Eigenschaften, und vorzugsweise aus einem weicheren Kunststoff ausgebildet als die Spannhülse. Insbesondere bevorzugt ist die Rohrhülse aus einem thermoplastischen Kunststoff ausgebildet. Mögliche Materialien sind z.B. Polyethylen, Polyamid (insbesondere PA66), Polycarbonat, Polypropylen, Acrylnitril-Butadien-StyrolCopolymerisat (ABS) oder auch aus Mischungen (Blends) oder Kombinationen (Bikomponenten) solcher Materialien, gegebenenfalls mit Verstärkungen aus Kohlefasern oder Glasfasern. Dies ist insbesondere wichtig, damit die Rohrhülse auch auf ein Oberflächen-beschichtetes Aussenrohr, welches produktionsbedingt über leicht unterschiedliche Aussendurchmesser verfügt, aufgepresst werden kann.

Die Spannhülse ist vorzugsweise aus einem reibungserhöhten Kunststoff mit guten Rückfederungseigenschaften ausgebildet.

So kann es beispielsweise von Vorteil sein, wenn die Rohrhülse aus zähem, aber flexiblem Kunststoff gefertigt ist, während die Spannhülse aus einem Kunststoff, welcher gute Haftreibung auf dem Rohrmaterial oder der darauf angeordneten Beschichtung hat und möglichst durch die ständige Klemmung nicht deformiert. Die Rohrhülse ist daher vorteilhafterweise aus einem Material gefertigt, das es erlaubt, Durchmesserunterschiede möglichst gut auszugleichen, und das es erlaubt, die Rohrhülse auch auf beispielsweise beschichteten Rohren zu befestigen bzw. aufzupressen. Sowohl Spannhülse als auch die Rohrhülse können an ihrer Innen- und/oder Aussenseite beschichtet sein.

Vorteilhafterweise ist die Klemmschelle aus Hartkunststoff oder Metall ausgebildet, beispielsweise aus ABS, faserverstärktem Thermoplast, einer leichten NE-Legierung, Edelstahl mit dünner Wandung, oder einer Kombination dieser Materialien. Der Hebel kann also auch aus Kunststoff ausgebildet sein, oder als ein Metallhebel mit angeformten oder angeklebten Kunststoffbetätigungsbereichen.

Eine besonders bevorzugte Ausführungsform der Erfindung betrifft einen Stock, insbesondere Wanderstock, Trekkingstock, Nordic Walking-Stock, Langlaufstock oder Skistock mit einer Klemmvorrichtung gemäss einer der oben beschriebenen Ausführungsformen. Die Klemmvorrichtung dient dabei der Längenverstellung von wenigstens zwei oder drei Rohrabschnitten am Stock wobei vorzugsweise der von der Klemmvorrichtung zu klemmende Innenrohrabschnitt ungeschlitzt ausgebildet ist. Ein solcher Stock kann gemäss einer weiteren bevorzugten Ausführungsform zusätzlich zur Klemmvorrichtung eine auf der Innenseite der Rohrabschnitte angeordnete Klemmvorrichtung mit wenigstens einem Spreizelement aufweisen.

Weitere Ausführungsbeispiele sind in den abhängigen Ansprüchen beschrieben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

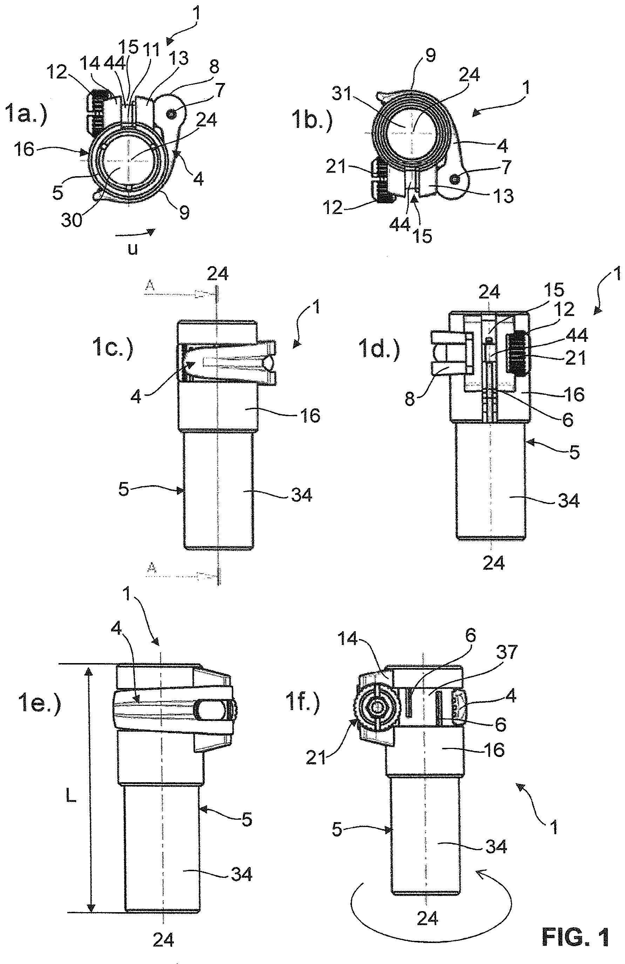

- Fig. 1: verschiedene schematische Darstellungen einer Klemmvorrichtung gemäss einer ersten bevorzugten Ausführungsform der Erfindung in der geschlossenen Position, wobei 1a die Klemmvorrichtung von oben gesehen entlang der Stockachse zeigt, 1b die Klemmvorrichtung von unten gesehen entlang der Stockachse zeigt, wobei in 1c-f die Klemmvorrichtung in unterschiedlichen Seitenansichten dargestellt ist;

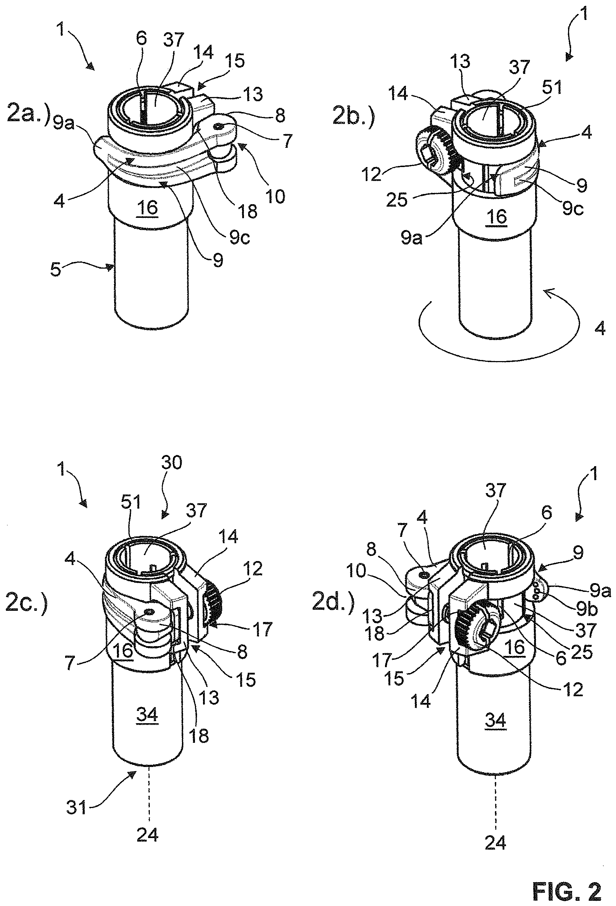

- Fig. 2: die Klemmvorrichtung gemäss 1 in vier unterschiedlichen perspektivischen Ansichten 2a-2d;

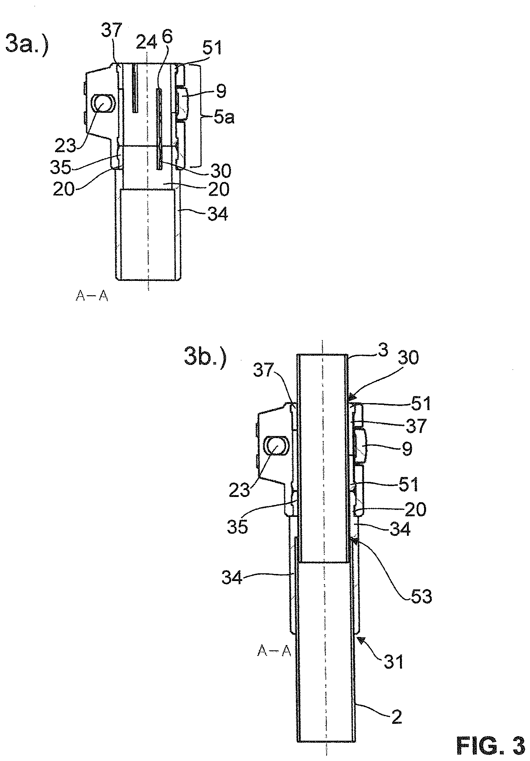

- Fig. 3: die Klemmvorrichtung gemäss Fig. 1 und 2 in einer Schnittdarstellung entlang der Linie A-A von 1c, wobei 3a die Klemmvorrichtung ohne eingeschobene Rohrabschnitte zeigt, und 3b die an einem Aussenrohrabschnitt befestigte Klemmvorrichtung mit eingeschobenem Innenrohrabschnitt;

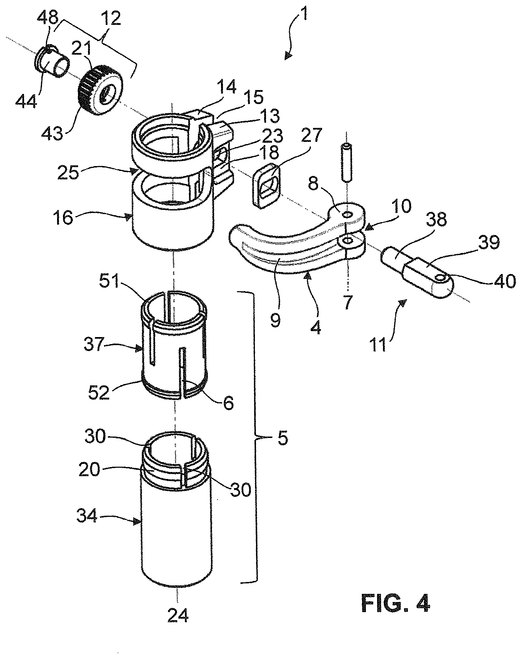

- Fig. 4: die Klemmvorrichtung gemäss Fig. 1-3 in einer Explosionsansicht.

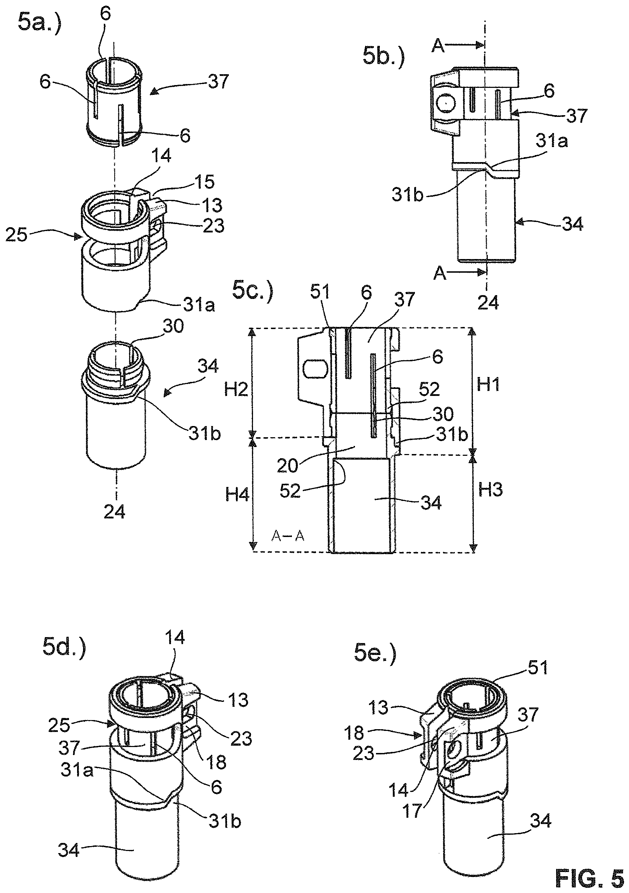

- Fig. 5: eine Klemmvorrichtung gemäss einer zweiten bevorzugten Ausführungsform der Erfindung in einer Darstellung ohne Klemmhebel und dessen Befestigung, wobei 5a eine Explosionsansicht zeigt, 5b eine Seitenansicht zeigt, 5c. eine Schnittdarstellung entlang der Linie A-A von 5b zeigt, 5d und 5e je eine perspektivische Ansicht zeigen;

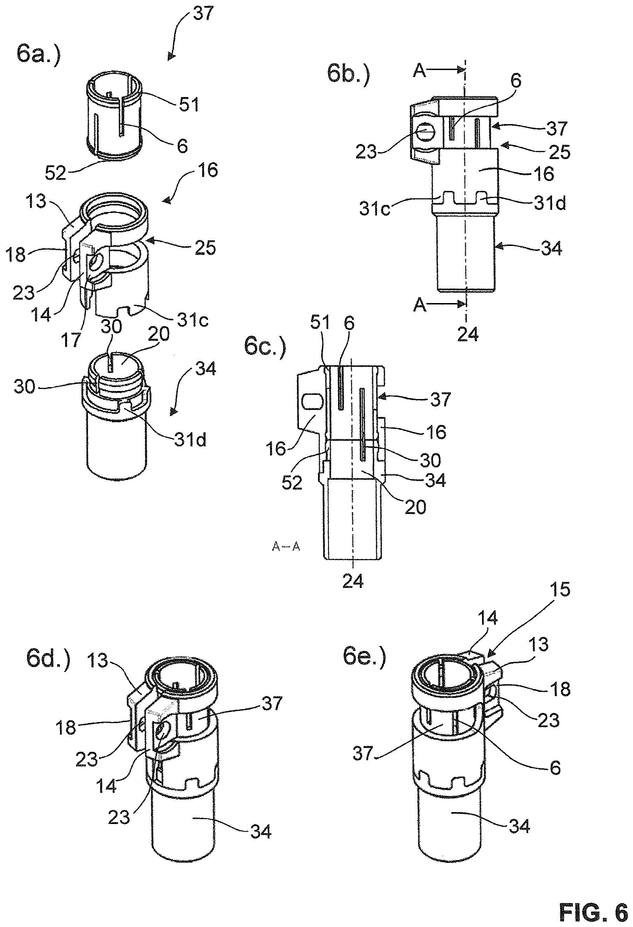

- Fig. 6: eine Klemmvorrichtung gemäss einer dritten bevorzugten Ausführungsform der Erfindung, in einer Darstellung ohne Klemmhebel und dessen Befestigung, wobei 6a eine Explosionsansicht zeigt, 6b eine Seitenansicht zeigt, 6c. eine Schnittdarstellung entlang der Linie A-A von 6b zeigt, 6d und 6e je eine perspektivische Ansicht zeigen;

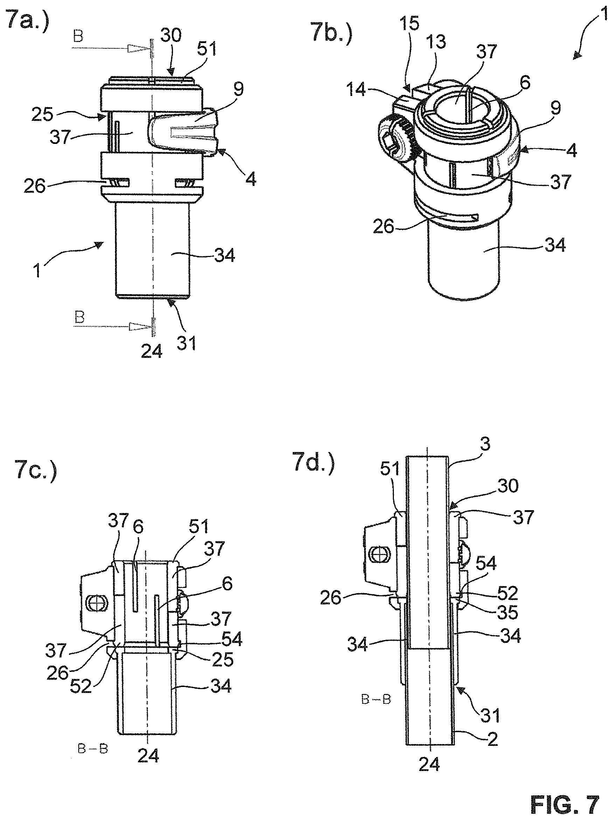

- Fig. 7: eine Klemmvorrichtung gemäss einer vierten bevorzugten Ausführungsform der Erfindung in der geschlossenen Position, wobei 7a die Klemmvorrichtung in einer schematischen Darstellung in einer Seitenansicht zeigt, 7b eine perspektivische Ansicht zeigt, 7c eine Schnittdarstellung entlang der Linie B-B von 7a ohne Rohrabschnitte und 7d eine Schnittdarstellung entlang der Linie B-B von 7a mit Rohrabschnitten zeigt;

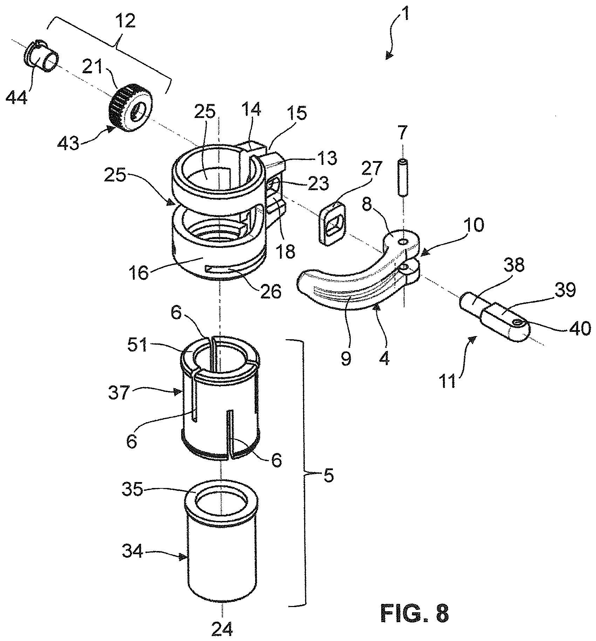

- Fig. 8: die Klemmvorrichtung gemäss Fig. 7 in einer Explosionsansicht;

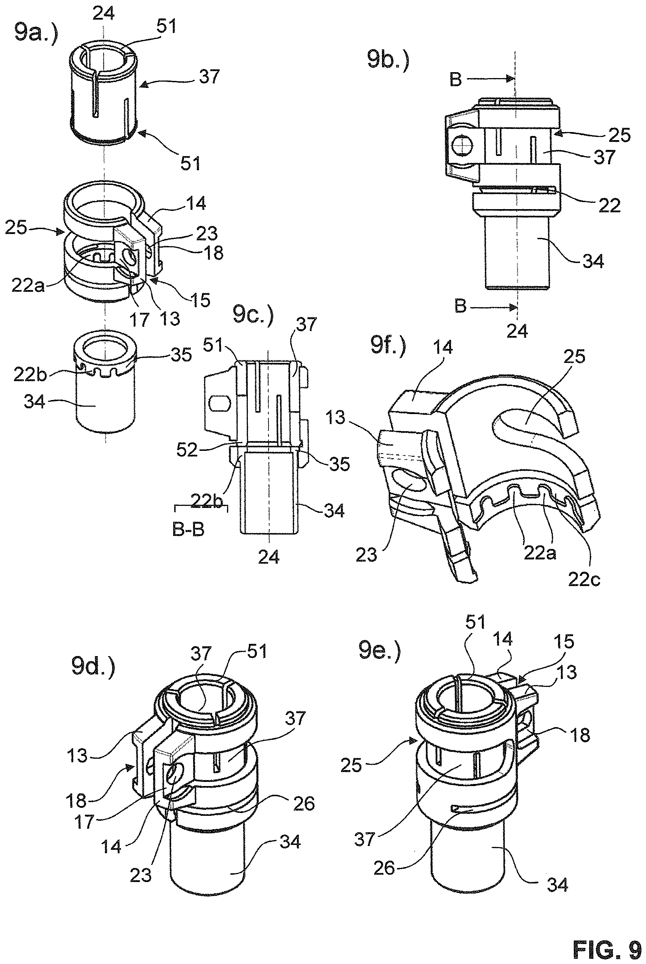

- Fig. 9: eine Klemmvorrichtung gemäss einer fünften bevorzugten Ausführungsform der Erfindung in einer Darstellung ohne Klemmhebel und dessen Befestigung, wobei 9a eine Explosionsansicht zeigt, 9b eine Seitenansicht zeigt, 9c. eine Schnittdarstellung entlang der Linie B-B von 9b zeigt, 9d und 9e je eine perspektivische Ansicht zeigen, während 9f) einen axialen Schnitt in perspektivischer Sicht zeigt;

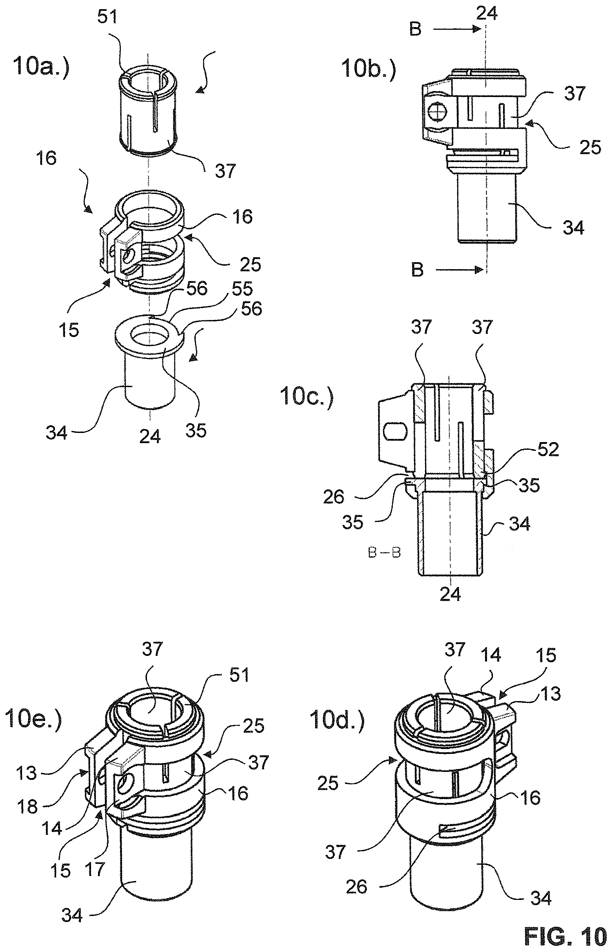

- Fig. 10: eine Klemmvorrichtung gemäss einer sechsten bevorzugten Ausführungsform der Erfindung in einer Darstellung ohne Klemmhebel und dessen Befestigung, wobei 10a eine Explosionsansicht zeigt, 10b eine Seitenansicht zeigt, 10c. eine Schnittdarstellung zeigt, 10d und 10e je eine perspektivische Ansicht zeigen;

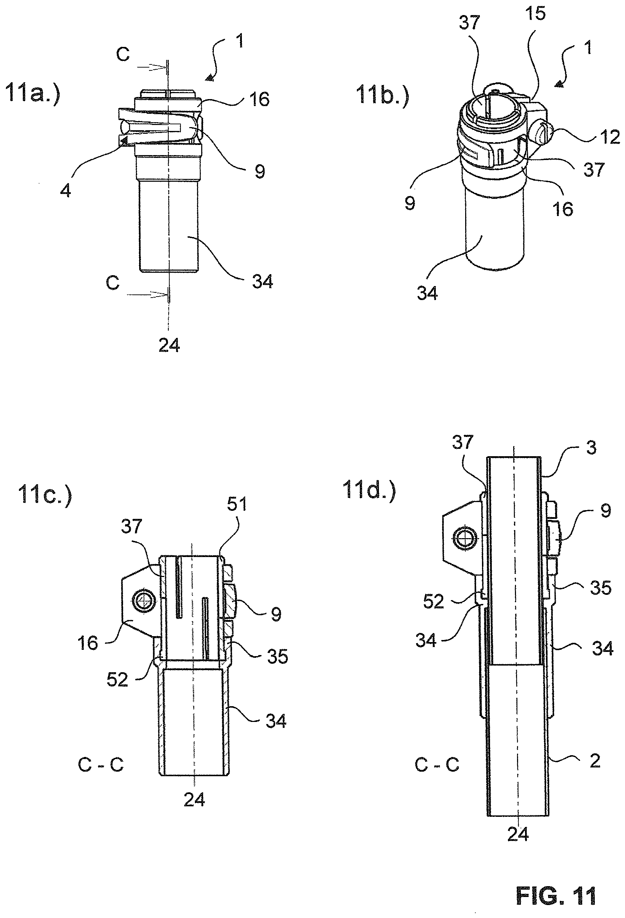

- Fig. 11: eine Klemmvorrichtung gemäss einer siebten bevorzugten Ausführungsform der Erfindung in der geschlossenen Position, wobei 11a die Klemmvorrichtung in einer schematischen Darstellung in einer Seitenansicht zeigt, 11b eine perspektivische Ansicht zeigt, 11c eine Schnittdarstellung entlang der Linie C-C von 11a ohne Rohrabschnitte und 11d eine Schnittdarstellung entlang der Linie C-C von 11a mit Rohrabschnitten zeigt;

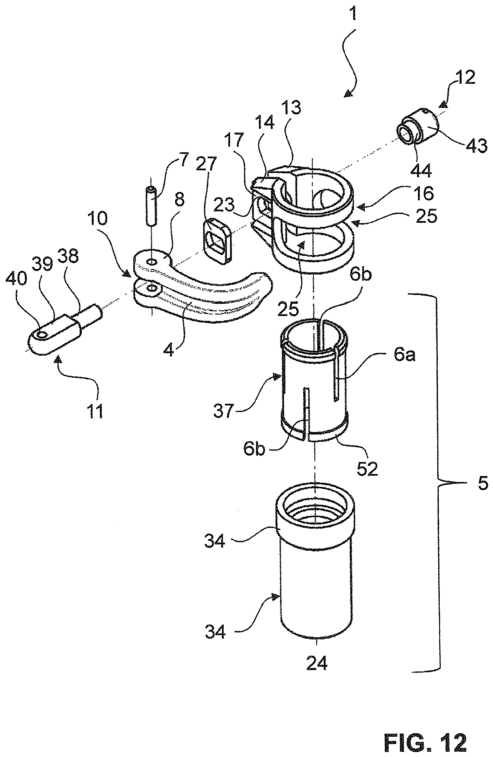

- Fig. 12: die Klemmvorrichtung gemäss Fig. 11 in einer Explosionsansicht;

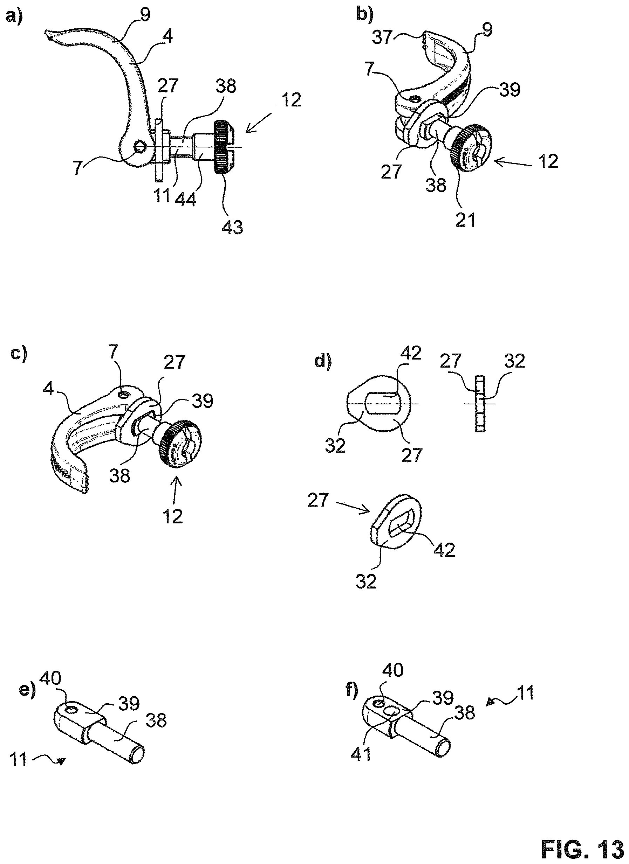

- Fig. 13: eine bevorzugte Ausführungsform eines Klemmhebels einer erfindungsgemässen Klemmvorrichtung mit Anschlag, wobei 13a nur Hebel, Stift und Stellschraube sowie Metallelement in geöffneter Position in einer seitlichen Ansicht zeigt, 13b dasselbe in einer perspektivischen Ansicht zeigt, 13c den entsprechend geschlossenen Hebel in einer perspektivischen Ansicht zeigt, 13d das Metallelement in Aufsicht, seitlicher Sicht und perspektivischer Ansicht zeigt, 13e den Querstift in einer perspektivischen Ansicht zeigt, und 13f eine leicht abgewandelte Ausführungsform des Querstifts in einer perspektivischen Ansicht darstellt;

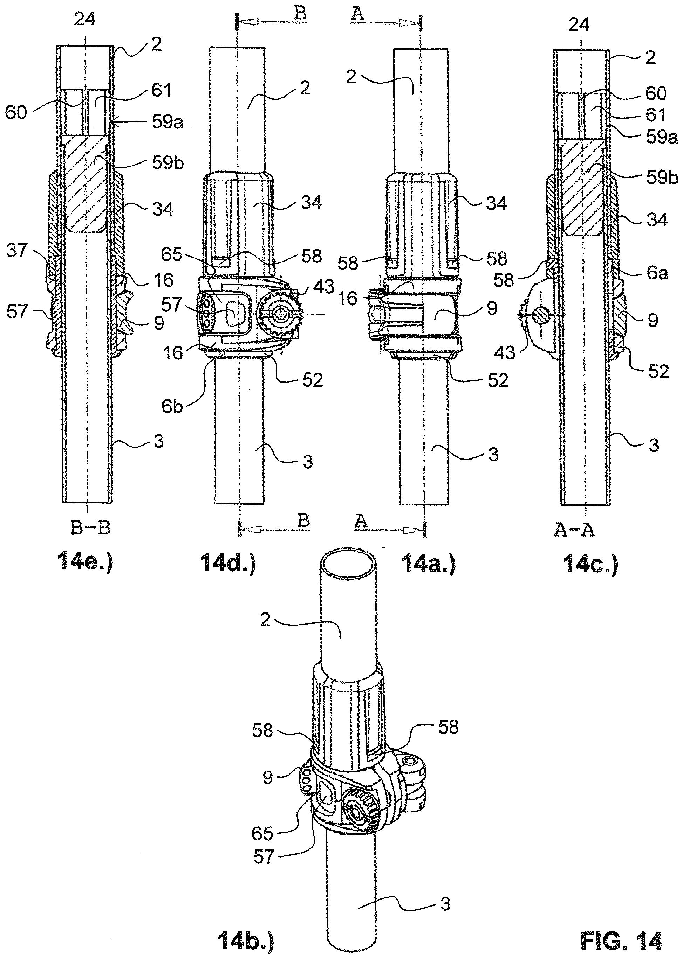

- Fig. 14: eine Klemmvorrichtung gemäss einer achten bevorzugten Ausführungsform der Erfindung in der geschlossenen Position, wobei a) die Klemmvorrichtung in einer schematischen Darstellung in einer Seitenansicht zeigt; b) eine perspektivische Ansicht; c) eine Schnittdarstellung entlang der Linie A-A von a); d) die Klemmvorrichtung in einer schematischen Darstellung in einer im Vergleich zu a) um 180 Grad gedrehten Seitenansicht;, und e) eine Schnittdarstellung entlang der Linie B-B von d);

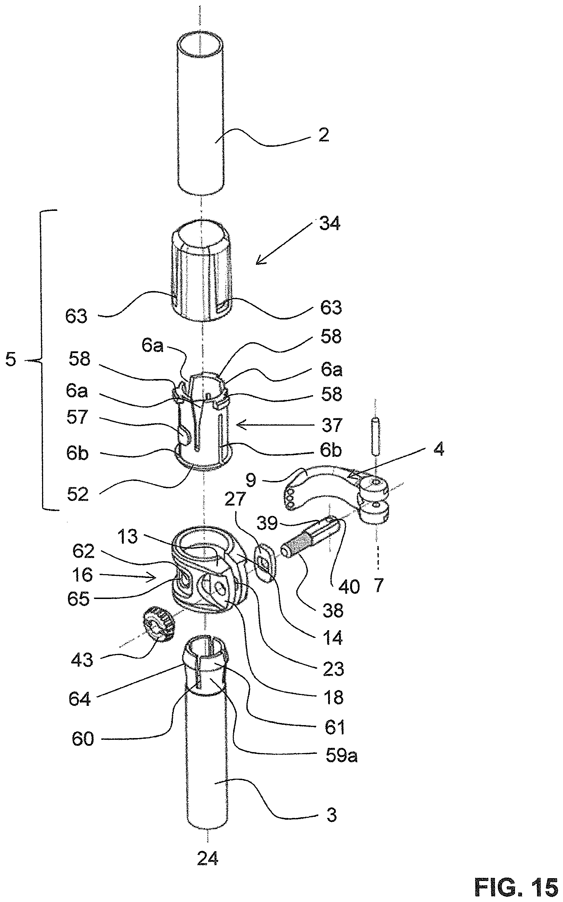

- Fig. 15: die Klemmvorrichtung gemäss Fig. 14 in einer Explosionsansicht.

### BESCHREIBUNG BEVORZUGTER AUSFÜHRUNGSFORMEN

Fig. 1-4 zeigen eine erste bevorzugte Ausführungsform einer erfindungsgemässen Klemmvorrichtung.

Die Figuren 1-4 zeigen eine Kunststoffmanschette 5, welche in einem oberen Abschnitt von einer Klemmschelle 16 umgriffen wird. Die Kunststoffmanschette weist somit einen unteren Abschnitt auf, in welchem die Kunststoffmanschette 5 an einem Aussenrohrabschnitt 2 befestigt ist, und einen oberen Abschnitt, in welchem die Kunststoffmanschette 5 zur Klemmung eines in eine obere Öffnung der Klemmvorrichtung 1 bzw. in den befestigten Aussenrohrabschnitt 2 einschiebbaren Innenrohrabschnittes 3, ausgebildet ist. Somit übt die Klemmvorrichtung 1 Ihre Klemmwirkung insbesondere im oberen Abschnitt der Klemmmanschette 5 im Bereich der Spannhülse 37 aus. Die Zweiteiligkeit der Kunststoffmanschette 5 - aufgeteilt in eine Spannhülse 37 und eine Rohrhülse 34, ist besonders gut in der Explosionsansicht von Fig. 4 ersichtlich. Die Rohrhülse 34 umgreift ein oberes Ende des Aussenrohrabschnittes 2 und ist daran befestigt, vorzugsweise aufgepresst. Dazu weist die Rohrhülse 34 einen inneren radialen Absatz 53 auf, der als Anschlag für das obere Ende des Aussenrohrabschnittes 2 dient. Eine mehrfach geschlitzte Spannhülse schliesst nach oben hin koaxial entlang der Längsachse der Klemmvorrichtung 1 bzw. der Stockachse 24 an die Rohrhülse 34 an. Dabei ist der Innendurchmesser der Spannhülse 37 kleiner als der Innendurchmesser der Rohrhülse 34, wobei der Innendurchmesser der Rohrhülse 34 im Wesentlichen dem Aussendurchmesser des Innenrohrabschnittes entspricht, bzw. gerade soviel kleiner ist, sodass der Innenrohrabschnitt gerade in den Aussenrohrabschnitt eingeführt werden kann.

Gemäss dem Ausführungsbeispiel von Fig. 1-4 sind sechs Schlitze 6 gleichmässig um den Umfang der Spannhülse 37 verteilt, wobei jeweils drei Schlitze 6 nach oben hin offen ausgebildet sind und drei Schlitze 6 nach unten hin offen ausgebildet sind. Die Rohrhülse 34 weist gemäss dieser ersten bevorzugten Ausführungsform von Fig. 1-4 einen unteren zylindrischen Abschnitt grösseren Aussendurchmessers auf, der ungeschlitzt ausgebildet ist, und einen oberen verjüngten Abschnitt 20 mit geringerem Aussendurchmesser als der des unteren Abschnitts. Hier ist der obere verjüngte Abschnitt 20 ebenfalls geschlitzt, und zwar fluchten die dargestellten drei nach oben hin offenen Schlitze 30 der Rohrhülse 34 mit den nach unten hin offenen Schlitze 6 der Spannhülse 37, was in Fig. 3 besonders gut erkennbar ist.

Die Klemmschelle 16 umgreift die Kunststoffmanschette 5 in axialer Richtung wenigstens teilweise und klemmt sie in einem geschlossenen Zustand. Die Klemmschelle 16 umläuft die Kunststoffmanschette 5 auf deren Aussenseite in Form eines vorzugsweise einstückigen Metallbandes. Die Klemmschelle 16 weist dem die Kunststoffmanschette 5 umgreifenden Bereich einen axialen, den Umfang der Klemmschelle 16 in diesem Bereich variabel machenden Schlitz 15 auf, wobei an der Klemmschelle 16 auf einer ersten Seite dieses axialen Schlitzes 15 ein erster Vorsprung 13 und auf einer zweiten Seite dieses axialen Schlitzes ein zweiter Vorsprung 14 angeordnet ist. Jeder dieser Vorsprünge 13, 14 weist eine koaxiale, im Wesentlichen senkrecht zur Achse 24 des Innenrohrabschnitts 3 bzw. Längsachse der Klemmvorrichtung angeordnete Durchtrittsöffnung 23 auf, wobei am ersten Vorsprung 13 ein Klemmhebel 4 angeachst ist. Dieser Klemmhebel 4 weist einen Hebelarm 9 auf, welcher bei geschlossener Klemmvorrichtung 1 die Klemmschelle 16 wenigstens teilweise umgreift. Der Hebelarm 9 ist dabei in seinem die Klemmschelle umgreifenden Bereich teilweise in einer Durchgangsöffnung 25 aufgenommen, welche in Umfangsrichtung U der Klemmschelle 16 wenigstens teilweise umlaufend ausgebildet ist. Der Klemmhebel 4 weist einen um eine Drehachse 7 des Klemmhebels 4 exzentrischen Abrollbereich 8 auf, mittels welchem sich der Abstand zwischen einem Anschlag 12 und einer auf der Außenseite des ersten Vorsprungs 13 angeordneten Gegenfläche zur Klemmung durch Verschwenken des Klemmhebels 4 in die geschlossene Position verringern lässt. Diese Gegenfläche ist in den in Figuren 4 und 8 gezeigten Ausführungsformen als Metallelement 27, bzw. Metallplättchen ausgebildet.

Ein erstes Ende des Hebelarms 9 ist auf der dem Abrollbereich 8 zugewandten Außenseite des ersten Vorsprunges 13 in einer Vertiefung 18 angeordnet ist und weist eine erste Ausnehmung oder eine Durchgangsöffnung für den Querstift 11 auf. Der Mittelbereich des Hebelarms 9 umläuft die Kunststoffmanschette 5 im Bereich der Durchgangsöffnung 25. Das zweite Ende des Hebelarms 9 ist auf der dem Anschlag 12 zugewandten Außenseite des zweiten Vorsprunges 14 in einer Vertiefung 17 angeordnet ist und weist eine zweite Ausnehmung oder eine Durchgangsöffnung für den Querstift 11 und/oder ein Anschlagselement 12 auf.

Das als Klemmschelle 16 ausgebildete Metallband ist auf der den Vorsprüngen 13,14 gegenüberliegenden Seite umlaufend ausgebildet mit Ausnahme einer Durchgangsöffnung 25. Der schlanke Hebelarm 9, liegt in der geschlossenen Position, wie dies in den Figuren 2b und 2d erkannt werden kann, in dieser umlaufenden, rückseitig zum Schlitz angeordneten Durchgangsöffnung 25. Bei diesem Ausführungsbeispiel ist der Klemmhebel 4 schlank und zu seiner Spitze 9a hin leicht zusammenlaufend ausgebildet. Auf der Innenseite der leicht nach aussen aufgewölbten Spitze des Klemmhebels 4 sind zudem Griffnoppen 9b angeordnet. So ergibt sich einerseits ein harmonischer Übergang der Gesamtkontur, durch die Aufwölbung an der Spitze zusammen mit den Griffnoppen kann aber mit dem Finger, gegebenenfalls auch mit einem Handschuh, ohne Weiteres der Hebel für das Lösen der geschlossenen Position ergriffen und aufgeschwenkt werden. Der Hebel 4 verfügt ferner auf seiner der Klemmschelle zugewandten Unterseite über eine Vertiefung 9c.

Der Querstift 11, welcher weiter unten noch im Detail beschrieben werden soll, ist hier als Stift mit einem an seinem dem Hebel zugewandten Ende angeordneten Aussengewinde ausgestaltet. Auf dieses Aussengewinde wird eine Stellschraube 12, resp. eine speziell ausgestaltete Rändelmutter aufgeschraubt. Anhand der Figuren 13a-f soll nun insbesondere das Zusammenwirken von Querstift 11, Hebel 4 und Stellschraube 12 näher erläutert werden.

Der Querstift 11 verfügt an seinem einen Ende über einen abgeflachten Abschnitt 39, welcher hier einen abgerundet rechteckig ausgebildeten Querschnitt aufweist. In diesem abgeflachten Bereich 39 ist eine quer verlaufende Durchtrittsöffnung 40 für den Achsstift 7, um welchen der Hebel 4 schwenkbar gelagert ist, angeordnet. Die Richtung dieser Durchtrittsöffnung 40 ist im Wesentlichen senkrecht zur Hauptverlaufsrichtung des Querstifts 11. Einstückig an diesem abgeflachten Bereich 39 angeformt ist ein Gewindeabschnitt 38, welcher im Wesentlichen einen Schraubenabschnitt darstellt.

Der abgeflachte Abschnitt 39 des Querstiftes 11 verfügt im Wesentlichen über die gleiche, einfach etwas geringere, Querschnittsfläche als eine längliche Durchtrittsöffnung 42 im Metallelement 27. Gemäss den in den Figuren 4 und 8 und 12 dargestellten Ausführungsbeispielen ist diese Durchtrittsöffnung 42 angerundet rechteckig ausgebildet, sie könnte aber auch einfach entsprechend der Querschnittsfläche des abgeflachten Abschnitts 39 eine andere Form aufweisen, sie könnte beispielsweise quadratisch sein, aber auch eine andere Form aufweisen angepasst an die Querschnittsfläche des Abschnitts 39. Es sollte einfach eine nicht-kreisförmige Form sein, damit sich der Stift 11 im Metallelement 27 nicht drehen kann, und dass sich damit auch Querstift 11 und Hebelarm 4 bezüglich Manschette nicht um die Achse des Querstifts 11 drehen können.

Der abgeflachte Bereich 39 verfügt nun in axialer Richtung des Querstifts 11 über eine Länge, dass er sowohl in der geschlossenen Position (vgl. Figur 13c) als auch in der offenen Position (vgl. Figur 13b) stets im Eingriff mit der dazu passend ausgebildeten Durchtrittsöffnung 42 ist. So wird sichergestellt, dass die relative Führung von Durchtrittsöffnung 42 und abgeflachtem Bereich 39 in jeder Hebelposition sichergestellt ist.

Eine spezielle Ausführungsform eines solchen Querstifts 11 ist in Figur 13f dargestellt. Insbesondere bei Stöcken, welche drei Rohrabschnitte aufweisen und entsprechend zwei derartige Klemmmechanismen erforderlich sind, ist es wichtig, dass die entsprechende Konstruktion der Klemme so leichtgewichtig ist wie möglich. Um eine Gewichtsreduktion zu ermöglichen, kann beim Querstift 11 in jenem Bereich, wo der abgeflachte Abschnitt 39 der Führung in der Durchtrittsöffnung 42 dient, eine weitere Bohrung, eine Zusatzbohrung 41, angeordnet sein. Diese kann, wie in Figur 13f dargestellt, gewissermassen parallel zur Durchtrittsöffnung 40 verlaufen, sie kann aber auch senkrecht dazu verlaufen oder es können auch zwei derartige Bohrungen vorgesehen sein, welche sich im Zentrum des Stiftes treffen.

Eine weitere Gewichtsersparnis wäre möglich, wenn im Gewindeabschnitt 38 ein Hohlraum angeordnet ist oder indem der Querstift 11 beispielsweise als Zweikomponentenbauteil ausgebildet ist, bei welchem der Gewindebereich 38 aus Metall besteht und der abgeflachte Bereich 39 aus einem Kunststoff, oder bei welchem auch der Gewindebereich 38 nur an seiner Aussenseite aus einer metallenen Gewindemanschette ausgebildet ist in dessen Innenraum Kunststoff angeordnet ist.

Das Metallelement 27, kann gemäss einem in Fig. 13d dargestellten alternativen Ausführungsbeispiel auch über die Hauptsache seines Umfangs über eine kreisrunde Aussenform verfügen, welche sich im Sinne eines Fortsatzes 32 auf einer Seite etwas erweitert. Dieser Fortsatz 32 würde dann in eine entsprechende Erweiterung, welche in der Vertiefung 18 im Vorsprung 13 vorgesehen wäre, eingreifen, und so verhindern, dass das Metallelement 27 in der Vertiefung 18 sich gewissermassen um die Achse des Querstifts 11 drehen kann, und dass sich damit auch der Querstift 11 und der Hebelarm 4 nicht um die Achse des Querstifts 11 drehen können. Die in Figur 13 dargestellte Rändelmutter verfügt über einen verjüngten Abschnitt 44, der vorzugsweise über ein Innengewinde verfügt, das in Wechselwirkung mit dem Aussengewinde am Gewindeabschnitt 38 des Querstifts 11 tritt, und über einen breiten Abschnitt 43, welcher insbesondre dafür ausgelegt ist, auf einer Schulter, welche durch die Vertiefung 17 beispielsweise gemäss Figur 2d gebildet wird, aufzuliegen, um so das Angreifen der Hebelkraft am Vorsprung 14 zu ermöglichen. Der verjüngte Abschnitt 44 greift in die Durchtrittsöffnung 23 ein, wie dies beispielsweise anhand der Figuren 1a, 1b, 1d erkennbar ist.

Des Weiteren verfügt der breite Verstellabschnitt 43 einerseits auf der Aussenseite über eine Zahnung 21, damit die Verstellung mit den Fingern einfach bewerkstelligt werden kann, auf der anderen Seite gibt es einen Schlitz 36, in welchen beispielsweise mit einem Werkzeug oder einer Münze eingegriffen werden kann. Auf der Frontseite ist zudem angegeben, in welche Richtung gedreht werden muss, damit die Schraube festgestellt resp. gelöst werden kann. Weitere spezielle Ausführungsformen von Rändelmuttern sind in der WO 2010/085905 A1 beschrieben.

Gemäss dem Ausführungsbeispiel von Fig. 1-4, erstreckt sich die Klemmschelle über etwa die Hälfte der Gesamtlänge L der Klemmvorrichtung 1. Der unten aus der Klemmschelle 1 herausragende Abschnitt der Rohrhülse 34 macht somit ebenfalls etwa die Hälfte der Länge L der Klemmvorrichtung 1 aus.

In Figur 1f ist erkennbar, dass der von der Klemmschelle 16 geklemmte Abschnitt der Spannhülse 37 teilweise durch die Durchgangsöffnung 25 der Klemmschelle hindurch zugänglich bzw. sichtbar ist.

Die Schnittdarstellungen von Fig. 3 lassen erkennen, wie die Klemmschelle 16 die Kunststoffmanschette 5, bestehend aus den beiden Bauteilen der Rohrhülse 34 und der Spannhülse 37 in diesem Ausführungsbeispiel teilweise umgreift.

Die Spannhülse 37 weist an ihrem oberen und unteren Ende je einen umlaufenden Flansch auf. Somit haben das obere und untere Ende der Spannhülse 37 einen grösseren Durchmesser als der mittlere, zylindrische Abschnitt der Spannhülse 37. Die Klemmschelle 16 umgreift gemäss diesem Ausführungsbeispiel sowohl den oberen ersten Flansch 51 als auch den unteren zweiten Flansch 52 der Spannhülse. Zudem umgreift die Klemmschelle 16 in ihrem unteren Abschnitt auch einen oberen Flansch 35 im verjüngten oberen Abschnitt 20 der Rohrhülse 34, der axial an das untere Ende der Spannhülse 37 anschliesst und im Wesentlichen den gleichen Innendurchmesser hat wie die Spannhülse 37. Zur Verbesserung der Verankerung der Rohrhülse 34 in der Klemmschelle 16 können auch formschlüssige Mittel am verjüngten Abschnitt 20 der Rohrhülse 34 und/oder an der Innenseite der Klemmschelle 16 angeordnet sein. Der obere verjüngte Abschnitt 20 der Rohrhülse 34 weist im vorliegenden Ausführungsbeispiel zu diesem Zweck eine Rippung bzw. Kerbung auf.

Das untere Ende der Klemmschelle 16 liegt auf einem Absatz der Rohrhülse 34 auf, welcher das untere Ende des verjüngten Abschnitts 20 definiert.

In Fig. 3b ist die Klemmvorrichtung mit eingeschobenen Rohrabschnitten 2, 3 eines zu klemmenden teleskopierbaren Stockes dargestellt. Der in die Rohrhülse 34 eingeführte Aussenrohrabschnitt 2 grösseren Durchmessers liegt an dem inneren Absatz 53 an. Der in das obere Ende des Aussenrohrabschnittes 2 eingeschobene Innenrohrabschnitt 3 kleineren Durchmessers wird vom Aussenrohrabschnitt 2 nur im Bereich der Rohrhülse 34 überlappt bzw. umhüllt. Der Innenrohrabschnitt erstreckt sich über die restliche Länge der Klemmvorrichtung 1 und darüber hinaus, indem es aus der oberen Öffnung der Klemmvorrichtung 1 herausragt.

In den Figuren 5 und 6 ist jeweils eine Klemmvorrichtung im Wesentlichen gemäss dem in den Figuren 1-4 dargestellten Ausführungsbeispiel dargestellt. Jedoch unterscheiden sich diese beiden Ausführungsbeispiele durch die Form der Verdrehsicherung. Die Verdrehsicherung wirkt zwischen der Klemmschelle 16 und der Rohrhülse 34 und wird in beiden dargestellten Beispielen von Fig. 5 und 6 durch formschlüssige Mittel erzielt.

In dem bevorzugten Ausführungsbeispiel von Figur 5 weist die Rohrhülse 34 an dem oberen Ende ihres unteren unverjüngten zylindrischen Abschnitts einen umlaufenden Flansch mit zwei Absätzen 31b auf, die jeweils komplementär zu zwei Absätzen 31a am unteren Rand der Klemmschelle 16 ausgebildet sind. Somit weist die Klemmschelle 16 in ihrer einen umfangsseitigen Hälfte eine in axialer Richtung gemessene Länge H1 auf, die grösser ist als die Länge H2 in ihrer anderen umfangsseitigen Hälfte in. Entsprechend weist die Rohrhülse 34 in ihrer einen umfangsseitigen Hälfte eine kleinere Länge H3 auf als die Länge H4 ihrer anderen umfangsseitigen Hälfte.

In dem bevorzugten Ausführungsbeispiel von Fig. 6 ist die Verdrehsicherung als Verzahnung von Klemmschelle 16 und Rohrhülse 34 dargestellt. Dabei weist die Rohrhülse 34 an dem oberen Ende ihres unteren unverjüngten zylindrischen Abschnitts einen umlaufenden Flansch mit nach oben ragenden Zähnen bzw. Rippen auf. Entsprechend komplementäre nach unten gerichtete Zähne bzw. Rippen am unteren Ende der Klemmschelle 16 greifen dann in die Zwischenräume zwischen den Zähnen bzw. Rippen der Rohrhülse 34 ein und verhindern so eine relative Drehbewegung von Rohrhülse 34 zu Klemmschelle 16. Dank der Verdrehsicherung wird die Rotation der Klemmschelle um den Aussenrohrabschnitt 2 verhindert.

Die Spannhülse 37 kann jedoch, unabhängig von der Art der Verdrehsicherung zwischen Klemmschelle 1 und Rohrhülse 34, gegenüber bzw. innerhalb der Klemmschelle 16 und je nach Ausführungsbeispiel auch gegenüber der Rohrhülse 34 frei drehbar oder möglicherweise gar axial beweglich gelagert sein.

In Figuren 7 und 8 ist ein alternatives bevorzugtes Ausführungsbeispiel der Klemmvorrichtung dargestellt. In diesem Ausführungsbeispiel weist die Klemmschelle 16 unterhalb der Durchgangsöffnung 25 einen im Umfangsrichtung teilweise umlaufenden Schlitz 26 auf. Dieser ist gemäss den Figuren 7a und 7b nur in einem dem zwischen den Vorsprüngen 13, 14 angeordneten axialen Schlitz 15 gegenüberliegenden Bereich nicht durchgängig ausgestaltet. Die Spannhülse 37 weist in diesem Ausführungsbeispiel ebenfalls jeweils an ihrem oberen und unteren Ende je einen Flansch 51, 52 auf. Dabei ragt der obere Flansch 51 über das obere Ende der Klemmschelle 16 hinaus und liegt somit auf dem oberen Rand der Klemmschelle 16 auf. Der untere Flansch 52 ragt in radialer Richtung in den Schlitz 26 der Klemmschelle 16 hinein, was die axiale Position der Spannhülse 37 relativ zur Klemmschelle 16 festlegt. Im Bereich der Klemmschelle 16, wo der Schlitz 26 nicht durchgängig ist, weist die Klemmschelle 16 an ihrer Innenseite eine radiale umfangsseitige Vertiefung zur Aufnahme des unteren Flansches 52 der Rohrhülse 34 in diesem Bereich auf.

In den Figuren 7c und 7d ist ausserdem gut erkennbar, dass die Klemmschelle 16 ferner einen oberen umlaufenden Flansch 35 der Rohrhülse umgreift.

Die Figuren 9 und 10 zeigen jeweils eine Klemmvorrichtung im Wesentlichen gemäss dem in den Figuren 7-8 dargestellten Ausführungsbeispiel dargestellt. Jedoch unterscheiden sich diese beiden Ausführungsbeispiele durch die Form der Verdrehsicherung. Die Verdrehsicherung wirkt wiederum zwischen der Klemmschelle 16 und der Rohrhülse 34 und wird in beiden dargestellten Beispielen von Fig. 9 und 10 durch formschlüssige Mittel erzielt.

Zu diesem Zweck weist die Rohrhülse 34 im Ausführungsbeispiel von Fig. 9 einen oberen Flansch 35 auf, der an seinem äusseren Rand axial nach unten hin, d.h. von der Klemmschelle weg gerichtete Zähne bzw. Rippen 22b aufweist. Diese Zahnung 22b wird gemäss Fig. 9a in einem unteren Abschnitt von der Klemmschelle 16 umgriffen, und zwar von in der Innenwandung der Klemmschelle axial zur Rohrhülse 34 vorstehenden Rippen 22a. Diese Rippen 22a sind oben und unten abgerundet ausgebildet und zwischen ihnen liegen nach oben offene Vertiefungen 22c (vgl. Fig. 9f). Die Rippen 22b der Rohrhülse greifen damit in die nach oben offenen innenseitigen Vertiefungen 22c der Klemmschelle weitgehend formschlüssig ein und bilden dadurch die Verdrehsicherung zwischen Klemmschelle und Rohrhülse

Im Ausführungsbeispiel von Fig. 10 weist der obere Flansch 35 der Rohrhülse 34 an seinem äusseren Rand eine teilweise, hier ca. einen Viertel des Umfangs des oberen Flansches 35, umlaufende Ausnehmung auf, sodass der Flansch an diesem umfangsseitigen Abschnitt einen kleineren Aussendurchmesser aufweist als im übrigen vorstehenden umfangsseitigen Abschnitt. Der vorstehende Abschnitt des Flansches 10 greift in den Schlitz 26 der Klemmschelle 16 ein und durch den Anschlag der Absätze 56 an den beiden umfangsseitigen Enden des Schlitzes 26 der Klemmschelle 16 arretiert, was die Rotation der Rohrhülse 34 gegenüber der Klemmschelle 16 verhindert. Somit greifen in einem Bereich des Schlitzes 26 der Klemmschelle 16 sowohl der obere Flansch 35 der Rohrhülse 34, als auch der untere Flansch 52 der Spannhülse 37 teilweise in den Schlitz 26 der Klemmschelle 16 ein.

In Figur 11 ist ein weiteres alternatives bevorzugtes Ausführungsbeispiel der Klemmvorrichtung dargestellt. Es handelt sich hierbei um eine Variante mit einer gekürzten Klemmschelle.

Bei den bisherigen Ausführungsbeispielen der Fig. 1-10 sind die Spannhülse 37 und die Rohrhülse 34 stets auf Stoss angeordnet, d.h. das untere Ende der Spannhülse 37 kommt auf das obere Ende der Rohrhülse 34 zu liegen und die Klemmschelle 16 umgreift stets auch einen oberen Flansch 35 der Rohrhülse 34. Im vorliegenden Ausführungsbeispiel von Fig. 11 aber umgreift die Klemmschelle 16 nur einen oberen Abschnitt der Spannhülse 37 und liegt mit ihrem unteren Ende auf dem oberen Rand der Rohrhülse 34 auf. Dafür umgreift die Rohrhülse 34 mit Ihrem oberen Abschnitt einen unteren Abschnitt der Spannhülse 37, inklusive deren unteren Flansch. Der untere Rand der Spannhülse 37 liegt auf dem inneren umlaufenden Absatz 53 kleineren Innendurchmessers der Rohrhülse 34, welcher von unten her den oberen Anschlag für den Aussenrohrabschnitt 2 bildet, auf.

In den Figuren 14 und 15 ist ein weiteres alternatives bevorzugtes Ausführungsbeispiel der Klemmvorrichtung dargestellt. Es handelt sich hierbei um eine Variante mit einer gekürzten Klemmschelle 16. Dabei weist die Klemmschelle 16 insbesondere zwecks Verdrehsicherung bzw. Fixierung in radialer (bzgl. Verdrehung) und axialer Richtung wenigstens eine Durchgangsöffnung 62 für einen an der Spannhülse 37 angeordneten radialen Noppen 57 auf. Der Noppen 57 greift dabei von innen her in die Klemmschelle 16 ein. Die Klemmschelle 16 weist einen Steg 65 zwischen der Durchgangsöffnung für den Hebelarm 9 des Klemmhebels 4 und der Durchgangsöffnung für den radialen Noppen 57 in axialer Richtung auf. Die zu beiden Enden hin mehrfach geschlitzte Spannhülse 37 weist in diesem Ausführungsbeispiel zudem an seinem dem Aussenrohrabschnitt 2 zugewandten axialen Ende drei radiale Zungen 58 auf, welche von innen her in radialer Richtung in entsprechende Durchgangsöffnungen 63 (alternativ Vertiefungen möglich) an dem der Klemmschelle 16 zugewandten Ende der Rohrhülse 34 eingreifen. Die in Richtung der Rohrhülse 34 offenen Schlitze 6a der Spannhülse 37 sind im vorliegenden Ausführungsbeispiel zu dem der Rohrhülse 34 zugewandten Ende hin aufgeweitet. Im vorliegenden Ausführungsbeispiel weist der Innenrohrabschnitt 3 zudem ein Einschubelement 59 auf, das einen aus dem Innenrohrabschnitt 3 herausragenden ersten axialen Abschnitt 59a und einen in den Innenrohrabschnitt 3 hineinragenden zweiten axialen Abschnitt 59b aufweist. Dabei ist der aus dem Innenrohrabschnitt 3 herausragende erste axiale Abschnitt 59a geschlitzt ausgebildet, gemäss dem in Fig. 14 abgebildeten Ausführungsbespiel mit vier axialen, zur Klemmschelle 16 hin offenen Schlitzen 60, was zur Ausbildung von vier Federzungen 61 führt. Das Einschubelement kann eingeschoben und nur festgeklemmt sein, es kann aber auch zusätzlich verklebt werden.

**BEZUGSZEICHENLISTE**

| | | | |
|---|---|---|---|
| 1 | Klemmvorrichtung | | Metallelement |
| 2 | Aussenrohrabschnitt | 28 | Quersteg |
| 3 | Innenrohrabschnitt | 30 | axialer Schlitz in 20 |
| 4 | Klemmhebel | 31a | umlaufender Absatz in 16 |
| 5 | Kunststoffmanschette | 31b | Flansch mit Absatz in 34 |
| 6 | axialer Schlitz in 5 | 31c | Zähne in 16 |
| 7 | Drehachse von 4, Achsstift | 31d | Flansch mit Zähnen in 34 |
| 8 | Abrollbereich von 4 | 32 | Erweiterungsfortsatz an 27, Fortsatz |
| 9 | Hebelarm von 4 | | |
| 9a | Spitze von 9 | 33 | radiale Erweiterung für 32 in 18 |
| 9b | Griffnoppen an 9a | | |
| 10 | Schlitz in 8 | 34 | Rohrhülse |
| 11 | Querstift | 35 | Flansch am oberen Ende von 34 |
| 12 | Stellschraube, Rändelmutter | | |
| 13 | erster Vorsprung | 36 | Schlitz in 12 |
| 14 | zweiter Vorsprung | 37 | Spannhülse |
| 15 | Spalt zwischen 13 und 14 | 38 | Gewindeabschnitt von 11 |
| 16 | Klemmschelle | 39 | abgeflachter Abschnitt von 11 |
| 17 | Vertiefung in 14 für 12 | | |
| 18 | Vertiefung in 13 für 8 und 27 | 40 | Durchtrittsöffnung für 7 |
| 20 | verjüngter Abschnitt von 34 | 41 | Zusatzbohrung in 39 |
| 21 | gezahnte Oberfläche von 12 | 42 | Durchtrittsöffnung für 39 |
| 22a | Zahnung an 16 | 43 | breiter Verstellabschnitt von 12 |
| 22b | Zahnung an 35 | | |
| 23 | Durchtrittsöffnung in 13 und 14 für 11 | 44 | verjüngter Abschnitt von 12 |
| 24 | Stockachse | 51 | erster Flansch am oberen Ende von 37 |
| 25 | Durchgangsöffnung in 16 für 9 | | |
| | | 52 | zweiter Flansch am unteren Ende von 37 |
| 26 | Schlitz in 16 | | |
| 27 | Gegenfläche für 8 an 16, | 53 | umlaufender Absatz an |
| | Innenseite von 34 | | |
| 54 | teilweise umlaufende Vertiefung an Innenseite von 16 | | |
| 55 | teilweise umlaufende Ausnehmung in 35 | | |
| 56 | Absatz an 35 | | |
| 57 | Noppen an 37 | | |
| 58 | radiale Zunge an 37 | | |
| 59 | Einschubelement an 3 | | |
| 59a | aus 3 herausragender erster axialer Abschnitt von 59 | | |
| 59b | in 3 hineinragender zweiter axialer Abschnitt von 59 | | |
| 60 | Schlitz in 59 | | |
| 61 | Federzunge an 59 | | |
| 62 | Durchgangsöffnung in 16 für 57 | | |
| 63 | Durchgangsöffnung in 34 für 58 | | |
| 64 | Absatz an 59 bzw. 61 | | |
| 65 | Steg zwischen 62 und 25 | | |
| H1 | längere Hälfte von 16 | | |
| H2 | kürzere Hälfte von 16 | | |
| H3 | kürzere Hälfte von 34 | | |
| H4 | längere Hälfte von 34 | | |
| L | Gesamtlänge von 1 | | |
| U | Umfangsrichtung von 16 | | |

## Patentansprüche

1. Klemmvorrichtung (1) für einen Wanderstock, Trekkingstock, Nordic Walking-Stock, Langlaufstock oder Skistock zur lösbaren axialen Festlegung eines in eine Öffnung der Klemmvorrichtung einschiebbaren Innenrohrabschnittes (3),
wobei die Klemmvorrichtung eine Kunststoffmanschette (5) umfasst, welche an einem in eine weitere Öffnung der Klemmvorrichtung (5) einschiebbaren Aussenrohrabschnitt (2) befestigbar ist,
den Innenrohrabschnitt (3) wenigstens in einem axialen Abschnitt im Wesentlichen unmittelbar umgreift und im geschlossenen Zustand der Klemmvorrichtung (1) klemmt, wobei die Kunststoffmanschette (5) zwecks Klemmbarkeit entweder mindestens einen axialen, den Umfang der Kunststoffmanschette in diesem axialen Abschnitt (5b) variabel machenden Schlitz (6) aufweist, oder wenigstens bereichsweise aus einem verformbaren Elastomermaterial ausgebildet ist,
wobei die Klemmvorrichtung ferner eine koaxial zur Kunststoffmanschette (5) angeordnete Klemmschelle (16) aufweist, welche die Kunststoffmanschette (5) in axialer Richtung wenigstens teilweise umgreift und in einem geschlossenen Zustand klemmt, wobei die Klemmschelle (16) wenigstens in einem die Kunststoffmanschette (5) umgreifenden Bereich wenigstens einen axialen, den Umfang der Klemmschelle in diesem Bereich variabel machenden Schlitz (15) oder elastischen Bereich aufweist, wobei an der Klemmschelle (16) auf einer ersten Seite dieses axialen Schlitzes respektive elastischen Bereiches ein erster Vorsprung (13) und auf einer zweiten Seite dieses axialen Schlitzes respektive elastischen Bereiches ein zweiter Vorsprung (14) angeordnet ist, wobei jeder dieser Vorsprünge (13, 14) eine koaxiale im Wesentlichen senkrecht zur Achse (24) des Innenrohrabschnitts (3) angeordnete Durchtrittsöffnung (23) aufweist, wobei an mindestens einem der Vorsprünge ein Klemmhebel (4) angeachst ist, wobei der Klemmhebel (4) einen Hebelarm (9) aufweist, welcher bei geschlossener Klemmvorrichtung (1) die Klemmschelle (16) wenigstens teilweise umgreift, und wobei der Klemmhebel (4) einen um eine Drehachse (7) des Klemmhebels (4) exzentrischen Abrollbereich (8) aufweist, mittels welchem sich der Abstand zwischen einem auf der Aussenseite des zweiten Vorsprungs (14) angeordneten Anschlag (12) und einer auf der Außenseite des ersten Vorsprungs (13) angeordneten Gegenfläche (27) zur Klemmung durch Verschwenken des Klemmhebels (4) in die geschlossene Position verringern lässt,
**dadurch gekennzeichnet, dass** die Kunststoffmanschette aus zwei separaten Bauteilen (34, 37) ausgebildet ist, wovon ein erstes der zwei separaten Bauteile als zur Klemmschelle (16) koaxial angeordnete Rohrhülse (34) zur Befestigung der Klemmvorrichtung an dem Aussenrohrabschnitt (2) ausgebildet ist, und ein zweites der zwei separaten Bauteile als zur Rohrhülse (34) und zur Klemmschelle (16) koaxial angeordnete Spannhülse (37) zur Klemmung des in den Aussenrohrabschnitt (2) einschiebbaren Innenrohrabschnittes (3) ausgebildet ist.

2. Klemmvorrichtung nach einem der vorangehenden Ansprüche, **dadurch gekennzeichnet, dass** bei Klemmung ein Durchmesser der Spannhülse (37) und gegebenenfalls zusätzlich ein Durchmesser eines verjüngten oberen Abschnittes (20) der Rohrhülse (34) verringert wird, nicht aber ein Durchmesser des zu klemmenden Innenrohrabschnittes (3).

3. Klemmvorrichtung nach einem der vorangehenden Ansprüche, **dadurch gekennzeichnet, dass** die Spannhülse (37) wenigstens zwei, vorzugsweise wenigstens drei axial verlaufende Schlitze (6) aufweist, wobei die Schlitze (6) vorzugsweise gleichmäßig um den Umfang verteilt sind, und sich vorzugsweise nur über einen Teil einer axialen Länge (L) der Kunststoffmanschette (5) erstrecken, oder dass axial verlaufende elastische Bereiche angeordnet sind.

4. Klemmvorrichtung nach einem der vorangehenden Ansprüche, **dadurch gekennzeichnet, dass** die Klemmvorrichtung (1) ein Mittel zur Verdrehsicherung (31a-d) zwischen der Klemmschelle (16) und der Rohrhülse (34) aufweist, wobei dieses Mittel zur Verdrehsicherung (31a-d) vorzugsweise in Form eines Formschlusses zwischen der Klemmschelle (16) und der Rohrhülse (34) ausgebildet ist.

5. Klemmvorrichtung nach einem der vorangehenden Ansprüche, **dadurch gekennzeichnet, dass** die Spannhülse (37) mindestens an einem axialen Ende einen umlaufenden Flansch (51, 52) aufweist, vorzugsweise mindestens einen ersten Flansch (51) an einem oberen, der Rohrhülse abgewandten Ende der Spannhülse (34), insbesondere bevorzugt einen ersten Flansch (51) am oberen Ende und einen zweiten Flansch (52) an einem unteren Ende der Spannhülse (34).

6. Klemmvorrichtung nach einem der vorangehenden Ansprüche, **dadurch gekennzeichnet, dass** die Rohrhülse (34) in einem auf einem Aussenrohrabschnitt (2) montierten Zustand auf dem Aussenrohrabschnitt (2) kraft- und/oder form- und/oder stoffschlüssig befestigt ist, wobei die Rohrhülse (34) vorzugsweise auf den Aussenrohrabschnitt (2) aufgepresst ist.

7. Klemmvorrichtung nach einem der vorangehenden Ansprüche, **dadurch gekennzeichnet, dass** die Rohrhülse (34) an einem oberen Abschnitt der Rohrhülse (34) einen oberen umlaufenden Flansch (35) aufweist, welcher von der Klemmschelle (16) mindestens teilweise umgriffen wird.

8. Klemmvorrichtung (1) nach einem der vorangehenden Ansprüche, **dadurch gekennzeichnet, dass** die Klemmschelle (16) eine in Umfangsrichtung (U) der Klemmschelle (16) mindestens teilweise umlaufende, rückseitig zum Schlitz (6) angeordnete Durchgangsöffnung (25) aufweist, welche bei geschlossener Klemmvorrichtung (1) den Hebelarm (9) in Umfangsrichtung (U) wenigstens abschnittsweise aufnimmt.

9. Klemmvorrichtung (1) nach einem der vorhergehenden Ansprüche, **dadurch gekennzeichnet, dass** die Klemmschelle (16), vorzugsweise in einem der Rohrhülse (34) zugewandten Abschnitt unterhalb des Klemmhebels (4), einen in Umfangsrichtung (U) der Klemmvorrichtung teilweise umlaufenden Schlitz (26) aufweist, in welchen ein unterer Flansch (52) der Spannhülse (37) und/oder ein oberer Flansch (35) der Rohrhülse (34) eingreift.

10. Klemmvorrichtung (1) nach einem der vorangehenden Ansprüche, **dadurch gekennzeichnet, dass** die Rohrhülse (34) an ihrem oberen, der Spannhülse (37) zugewandten Ende einen vorzugsweise umlaufenden Flansch (35) aufweist, der einen unteren Anschlag für ein unteres, der Rohrhülse (34) zugewandtes Ende der Klemmschelle (16) bildet oder mindestens teilweise von der Klemmschelle (16) umgriffen ist und/oder mindestens teilweise in einen Schlitz (26) der Klemmschelle (16) eingreift.

11. Klemmvorrichtung nach einem der vorangehenden Ansprüche, **dadurch gekennzeichnet, dass** durch die Durchtrittsöffnung (23) ein Querstift (11) hindurch greift, welcher an der Außenseite des zweiten Vorsprungs (14) über den Anschlag (12) verfügt und welcher an der Außenseite des ersten Vorsprungs (13) die senkrecht zur Achse des Querstifts (11) und parallel zur Achse (24) des Rohrabschnitts (3) angeordnete Drehachse (7) für den Klemmhebel (4) aufweist, wobei es sich vorzugsweise bei der Durchtrittsöffnung (23) in beiden Vorsprüngen (13, 14) um ein rundum geschlossenes Loch handelt mit bevorzugtermassen einem Durchmesser im Bereich von 2-7 mm, wobei bevorzugtermassen der Durchmesser des Querstifts (11) im durch diese Durchtrittsöffnungen (23) hindurchtretenden Bereich im Bereich von 2-6 mm liegt.

12. Klemmvorrichtung (1) nach einem der vorhergehenden Ansprüche, **dadurch gekennzeichnet, dass** sowohl die Rohrhülse (34) als auch die Spannhülse (37) aus Kunststoff ausgebildet sind, aber eine unterschiedliche Materialzusammensetzung aufweisen, wobei vorzugsweise die Rohrhülse mindestens teilweise aus einem Material mit elastischen Eigenschaften ausgebildet ist, und vorzugsweise aus einem weicheren Kunststoff ausgebildet ist als die Spannhülse, wobei die Rohrhülse insbesondere bevorzugt aus einem thermoplastischen Kunststoff, bevorzugt ausgewählt aus der Gruppe bestehend aus: Acrylnitril-Butadien-Styrol (ABS), Polyamid (PA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und Polyvinylchlorid (PVC), oder einer Mischung solcher Kunststoffe, ausgebildet ist, und wobei die Spannhülse vorzugsweise aus einem gegenüber dem Material der Rohrhülse reibungserhöhten Kunststoff ausgebildet ist.

13. Klemmvorrichtung (1) nach einem der vorhergehenden Ansprüche, **dadurch gekennzeichnet, dass** die Klemmschelle aus Hartkunststoff und/oder Metall ausgebildet ist, vorzugsweise aus ABS oder faserverstärktem Thermoplast, oder einer leichten NE-Legierung, oder dünnwandigem Edelstahl.

14. Klemmvorrichtung (1) nach Anspruch 11, **dadurch gekennzeichnet, dass** der Anschlag (12) verstellbar ausgebildet ist, wobei vorzugsweise der Anschlag (12) mit einem Gewinde ausgebildet ist und der Querstift (11) mit einem Gegengewinde, und der Anschlag als Mutter (12) oder Schraube ausgebildet ist, vorzugsweise mit einer umlaufenden Zahnung (21) und/oder einem Kamm und/oder einer Nut für den Eingriff eines Verstellwerkzeugs.

15. Stock, insbesondere Wanderstock, Trekkingstock, Nordic Walking-Stock, Langlaufstock oder Skistock mit einer Klemmvorrichtung (1) nach einem der vorhergehenden Ansprüche, insbesondere bevorzugt zur Längenverstellung von wenigstens zwei Rohrabschnitten (2, 3) oder drei Rohrabschnitten, wobei vorzugsweise der von der Klemmvorrichtung zu klemmende Innenrohrabschnitt (3) ungeschlitzt ausgebildet ist.

## Claims

1. A clamping apparatus (1) for a hiking pole, trekking pole, Nordic walking pole, cross-country pole or ski pole for axially fixing an inside tube portion (3), which is insertable into an opening of the clamping apparatus, so as to be releasable,
wherein the clamping apparatus includes a plastic sleeve (5), which is fastenable on an outside tube portion (2) which is insertable into a further opening of the clamping apparatus (5), encompasses the inside tube portion (3) substantially directly at least in an axial portion and clamps it when the clamping apparatus (1) is in the closed state,
wherein, for the purposes of clampability, the plastic sleeve (5) either comprises at least one axial slot (6) which makes the circumference of the plastic sleeve variable in said axial portion (5b) or is realized at least in regions from a deformable elastomer material,
wherein the clamping apparatus additionally comprises a clamping clip (16) which is arranged coaxially with respect to the plastic sleeve (5), encompasses the plastic sleeve (5) at least in part in the axial direction and clamps it when closed,
wherein the clamping clip (16), at least in a region encompassing the plastic sleeve (5), comprises at least one axial slot (15), which makes the circumference of the clamping clip variable in said region, or elastic region,
wherein on the clamping clip (16) a first projection (13) is arranged on a first side of said axial slot or rather elastic region and a second projection (14) is arranged on a second side of said axial slot or rather elastic region,
wherein each of said projections (13, 14) comprises a coaxial opening (23) which is arranged in a substantially perpendicular manner to the axis (24) of the inside tube portion (3),
wherein a clamping lever (4) is axially mounted on at least one of the projections,
wherein the clamping lever (4) comprises a lever arm (9) which encompasses the clamping clip (16) at least in part when the clamping apparatus (1) is closed, and wherein the clamping lever (4) comprises a roll-off region (8) which is eccentric about a rotational axis (7) of the clamping lever (4), by means of which roll-off region the spacing between a stop (12), arranged on the outer side of the second projection (14), and a counter surface (27) for clamping, which is arranged on the outside surface of the first projection (13), can be reduced as a result of pivoting the clamping lever (4) into the closed position,
**characterized in that**
the plastic sleeve is realized from two separate components (34, 37), of which a first of the two separate components is realized as a tube sleeve (34), which is arranged coaxially with respect to the clamping clip (16), for fastening the clamping apparatus on the outside tube portion (2),
and a second of the two separate components is realized as a clamping sleeve (37), which is arranged coaxially to the tube sleeve (34) and to the clamping clip (16), for clamping the inside tube portion (3) which is insertable into the outside tube portion (2).

2. The clamping apparatus as claimed in one of the preceding claims, **characterized in that** when clamping, a diameter of the clamping sleeve (37) and, where applicable, additionally a diameter of a tapered upper portion (20) of the tube sleeve (34) is reduced, but not a diameter of the inside tube portion (3) which is to be clamped.

3. The clamping apparatus as claimed in one of the preceding claims, **characterized in that** the clamping sleeve (37) comprises at least two, preferably at least three axially extending slots (6), wherein the slots (6) are preferably distributed evenly about the circumference, and preferably only extend over part of an axial length (L) of the plastic sleeve (5), or **in that** axially extending resilient regions are arranged.

4. The clamping apparatus as claimed in one of the preceding claims, **characterized in that** the clamping apparatus (1) comprises a means for anti-rotation protection (31a-d) between the clamping clip (16) and the tube sleeve (34), wherein said means for anti-rotation protection (31a-d) is preferably realized in the form of positive locking between the clamping clip (16) and the tube sleeve (34).

5. The clamping apparatus as claimed in one of the preceding claims, **characterized in that** at least on one axial end, the clamping sleeve (37) comprises a circumferential flange (51, 52), preferably at least one first flange (51) on an upper end of the clamping sleeve (34) remote from the tube sleeve, in a particularly preferred manner a first flange (51) on the upper end and a second flange (52) on a lower end of the clamping sleeve (34).

6. The clamping apparatus as claimed in one of the preceding claims, **characterized in that**, when mounted on the outside tube portion (2); the tube sleeve (34) is fastened in a frictional locking and/or positive locking and/or materially bonded manner on the outside tube portion (2).

7. The clamping apparatus as claimed in one of the preceding claims, **characterized in that** on an upper portion of the tube sleeve (34), the tube sleeve (34) comprises an upper circumferential flange (35) which is encompassed at least in part by the clamping clip (16).

8. The clamping apparatus (1) as claimed in one of the preceding claims, **characterized in that** the clamping clip (16) comprises an opening (25) which extends around in the circumferential direction (U) of the clamping clip (16) at least in part, is arranged at the rear side of the slot (6) and receives the lever arm (9) in the circumferential direction (U) at least in portions when the clamping apparatus (1) is closed.

9. The clamping apparatus (1) as claimed in one of the preceding claims, **characterized in that** the clamping clip (16), preferably in a portion facing the tube sleeve (34) below the clamping lever (4), comprises a slot (26) which extends around in the circumferential direction (U) of the clamping apparatus in part and in which a lower flange (52) of the clamping sleeve (37) and/or an upper flange (35) of the tube sleeve (34) engages.

10. The clamping apparatus (1) as claimed in one of the preceding claims, **characterized in that** at its upper end facing the clamping sleeve (37), the tube sleeve (34) comprises a preferably circumferential flange (35) which forms a lower stop for a lower end of the clamping clip (16) facing the tube sleeve (34) or is encompassed at least in part by the clamping clip (16) and/or engages at least in part in a slot (26) of the clamping clip (16).

11. The clamping apparatus as claimed in one of the preceding claims, **characterized in that** a cross pin (11), which has the stop (12) on the outside surface of the second projection (14) and which, on the outside surface of the second projection (14) and which, on the outside surface of the first projection (13) comprises a rotational axis (7) for the clamping lever (4), which rotational axis is arranged perpendicular to the axis of the cross pin (11) and parallel to the axis (24) of the tube portion (3), reaches through the opening (23), wherein the opening (23) in the two projections (13, 14) is preferably a hole that is closed all round and preferably has a diameter within the range of 2 - 7 mm, wherein the diameter of the cross pin (11) is preferably within the range of 2 - 6 mm in the region that passes through said openings (23).

12. The clamping apparatus (1) as claimed in one of the preceding claims, **characterized in that** both the tube sleeve (34) and the clamping sleeve (37) are realized from plastics material, but comprise a different material composition, wherein the tube sleeve is preferably realized at least in part from a material with resilient properties, and is preferably realized from a softer plastics material than the clamping sleeve, wherein the tube sleeve is realized in a particularly preferred manner from a thermoplastic material, in a preferred manner selected from the group consisting of: acrylonitrile butadiene rubber (ABS), polyamide (PA), polymethyl methacrylate (PMMA), polycarbonate (PC), polyethylene terephthalate (PET), polyethylene (PE), polypropylene (PP), polystyrene (PS), poly ether ketone (PEEK) and polyvinyl chloride (PVC), or from a mixture of such plastics materials, and wherein the clamping sleeve is preferably realized from a plastics material with increased friction in relation to the material of the tube sleeve.

13. The clamping apparatus (1) as claimed in one of the preceding claims, **characterized in that** the clamping clip is realized from hard plastics material and/or metal, preferably from ABS or fiber-reinforced thermoplastic resin, or a light non-ferrous alloy, or thin-walled stainless steel.

14. The clamping apparatus (1) as claimed in claim 11, **characterized in that** the stop (12) is realized so as to be adjustable, wherein the stop (12) is preferably realized with a thread and the cross pin (11) with a counter thread, and the stop is realized as a nut (12) or screw, preferably with circumferential teeth (21) and/or a comb and/or a groove for the engagement of an adjusting tool.

15. A pole, in particular a hiking pole, trekking pole, Nordic walking pole, cross-country pole or ski pole having a clamping apparatus (1) as claimed in one of the preceding claims, in a particularly preferred manner for adjusting the length of at least two tube portions (2, 3) or three tube portions, wherein the inside tube portion (3) which is to be clamped by the clamping apparatus is preferably realized without any slots.

## Revendications

1. Dispositif de serrage (1) pour un bâton de marche, un bâton de randonnée, un bâton de marche nordique, un bâton de ski de fond ou un bâton de ski, pour la fixation axiale détachable d'une portion de tube intérieur (3) pouvant être insérée dans une ouverture du dispositif de serrage,
le dispositif de serrage comprenant une manchette en plastique (5) qui peut être fixée à une portion de tube extérieur (2) pouvant être insérée dans une ouverture supplémentaire du dispositif de serrage (5),
venant en prise essentiellement directement au moins dans une portion axiale autour de la portion de tube interne (3) et la serrant dans l'état fermé du dispositif de serrage (1), la manchette en plastique (5), pour sa fonction de serrage, soit présentant au moins une fente axiale (6) permettant de faire varier la périphérie de la manchette en plastique dans cette portion axiale (5b), soit étant réalisée au moins en partie à partir d'un matériau élastomère déformable,
le dispositif de serrage présentant en outre un collier de serrage (16) disposé coaxialement à la manchette en plastique (5), qui vient en prise au moins en partie autour de la manchette en plastique (5) dans la direction axiale et la serre dans un état fermé, le collier de serrage (16) présentant, au moins dans une région venant en prise autour de la manchette en plastique (5), au moins une fente axiale (15) ou une région élastique permettant de faire varier la périphérie du collier de serrage dans cette région, une première saillie (13) étant disposée sur le collier de serrage (16) sur un premier côté de cette fente axiale, respectivement de cette région élastique, et sur un deuxième côté de cette fente axiale, respectivement de cette région élastique, étant disposée une deuxième saillie (14), chacune de ces saillies (13, 14) présentant une ouverture de passage (23) coaxiale disposée essentiellement perpendiculairement à l'axe (24) de la portion de tube intérieur (3), un levier de serrage (4) étant axé sur au moins l'une des saillies, le levier de serrage (4) présentant un bras de levier (9) qui, lorsque le dispositif de serrage (1) est fermé, vient en prise au moins en partie autour du collier de serrage (16), et le levier de serrage (4) présentant une région de roulement excentrique (8) autour d'un axe de rotation (7) du levier de serrage (4), au moyen de laquelle la distance entre une butée (12) disposée sur le côté extérieur de la deuxième saillie (14) et une surface conjuguée (27) disposée sur le côté extérieur de la première saillie (13) peut être réduite pour serrer par pivotement le levier de serrage (4) dans la position fermée,
**caractérisé en ce que** la manchette en plastique est réalisée à partir de deux composants séparés (34, 37) dont un premier des deux composants séparés est réalisé sous forme de douille tubulaire (34) disposée coaxialement par rapport au collier de serrage (16) pour la fixation du dispositif de serrage sur la portion de tube extérieur (2), et un deuxième des deux composants séparés est réalisé en tant que douille de serrage (37) disposée coaxialement par rapport à la douille tubulaire (34) et par rapport au collier de serrage (16) pour serrer la portion de tube intérieur (3) pouvant être insérée dans la portion de tube extérieur (2).

2. Dispositif de serrage selon l'une quelconque des revendications précédentes, **caractérisé en ce que** lors du serrage, un diamètre de la douille de serrage (37) et éventuellement en outre un diamètre d'une portion supérieure rétrécie (20) de la douille tubulaire (34) sont réduits, mais toutefois pas un diamètre de la portion de tube intérieur (3) à serrer.

3. Dispositif de serrage selon l'une quelconque des revendications précédentes, **caractérisé en ce que** la douille de serrage (37) présente au moins deux, de préférence au moins trois fentes s'étendant axialement (6), les fentes (6) étant de préférence réparties uniformément sur la périphérie, et s'étendant de préférence seulement sur une partie d'une longueur axiale (L) de la manchette en plastique (5), ou **en ce que** des régions élastiques s'étendant axialement sont prévues.

4. Dispositif de serrage selon l'une quelconque des revendications précédentes, **caractérisé en ce que** le dispositif de serrage (1) présente un moyen pour la fixation en rotation (31a-d) entre le collier de serrage (16) et la douille tubulaire (34), ce moyen étant réalisé pour la fixation en rotation (31a-d) de préférence sous la forme d'un engagement positif entre le collier de serrage (16) et la douille tubulaire (34).

5. Dispositif de serrage selon l'une quelconque des revendications précédentes, **caractérisé en ce que** la douille de serrage (37) présente au moins au niveau d'une extrémité axiale une bride périphérique (51, 52), de préférence au moins une première bride (51) au niveau d'une extrémité supérieure opposée à la douille tubulaire de la douille de serrage (34), en particulier de préférence une première bride (51) à l'extrémité supérieure et une deuxième bride (52) à une extrémité inférieure de la douille de serrage (34).

6. Dispositif de serrage selon l'une quelconque des revendications précédentes, **caractérisé en ce que** la douille tubulaire (34) est fixée sur la portion de tube extérieur (2) dans un état monté sur une portion de tube extérieur (2), par engagement par force et/ou par engagement positif et/ou par engagement par liaison de matière, la douille tubulaire (34) étant de préférence pressée sur la portion de tube extérieur (2).

7. Dispositif de serrage selon l'une quelconque des revendications précédentes, **caractérisé en ce que** la douille tubulaire (34) présente, au niveau d'une portion supérieure de la douille tubulaire (34), une bride supérieure périphérique (35) autour de laquelle s'engage au moins en partie le collier de serrage (16).

8. Dispositif de serrage (1) selon l'une quelconque des revendications précédentes, **caractérisé en ce que** le collier de serrage (16) présente une ouverture de passage (25) au moins en partie périphérique dans la direction périphérique (U) du collier de serrage (16), disposée du côté arrière par rapport à la fente (6), qui, lorsque le dispositif de serrage (1) est fermé, reçoit au moins en partie le bras de levier (9) dans la direction périphérique (U).

9. Dispositif de serrage (1) selon l'une quelconque des revendications précédentes, **caractérisé en ce que** le collier de serrage (16), de préférence dans une portion tournée vers la douille tubulaire (34) en dessous du levier de serrage (4), présente une fente partiellement périphérique (26) dans la direction périphérique (U) du dispositif de serrage, dans laquelle s'engage une bride inférieure (52) de la douille de serrage (37) et/ou une bride supérieure (35) de la douille tubulaire (34).

10. Dispositif de serrage (1) selon l'une quelconque des revendications précédentes, **caractérisé en ce que** la douille tubulaire (34) présente, au niveau de son extrémité supérieure tournée vers la douille de serrage (37), une bride de préférence périphérique (35) qui forme une butée inférieure pour une extrémité inférieure, tournée vers la douille tubulaire (34), du collier de serrage (16) ou autour de laquelle s'engage au moins en partie le collier de serrage (16) et/ou qui vient en prise au moins en partie dans une fente (26) du collier de serrage (16).

11. Dispositif de serrage selon l'une quelconque des revendications précédentes, **caractérisé en ce qu'**une goupille transversale (11) s'engage à travers l'ouverture de passage (23), laquelle présente la butée (12) au niveau du côté extérieur de la deuxième saillie (14) et laquelle présente, du côté extérieur de la première saillie (13), l'axe de rotation (7) pour le levier de serrage (4) disposé perpendiculairement par rapport à l'axe de la goupille transversale (11) et parallèlement à l'axe (24) de la portion tubulaire (3), l'ouverture de passage (23) dans les deux saillies (13, 14) étant de préférence un trou fermé tout autour avec de préférence un diamètre de l'ordre de 2-7 mm, le diamètre de la goupille transversale (11) étant de préférence situé dans la plage de 2-6 mm dans la région traversant ces ouvertures de passage (23).

12. Dispositif de serrage (1) selon l'une quelconque des revendications précédentes, **caractérisé en ce qu'**à la fois la douille tubulaire (34) et la douille de serrage (37) sont réalisées en plastique, mais présentent une composition de matériau différente, la douille tubulaire étant de préférence réalisée au moins en partie à partir d'un matériau ayant des propriétés élastiques et de préférence étant réalisée à partir d'un plastique plus souple que la douille de serrage, la douille tubulaire étant réalisée notamment de préférence à partir d'un plastique thermoplastique, de préférence choisi parmi le groupe constitué de : acrylonitrile-butadiène-styrène (ABS), polyamide (PA), polyméthylméthacrylate (PMMA), polycarbonate (PC), polyéthylènetéréphtalate (PET), polyéthylène (PE), polypropylène (PP), polystyrène (PS), polyétheréthercétone (PEEK) et chlorure de polyvinyle (PVC), ou d'un mélange de tels plastiques, et la douille de serrage étant de préférence réalisée à partir d'un plastique à frottement accru par rapport au matériau de la douille tubulaire.

13. Dispositif de serrage (1) selon l'une quelconque des revendications précédentes, **caractérisé en ce que** le collier de serrage se compose de plastique dur et/ou de métal, de préférence d'ABS ou de matériau thermoplastique renforcé par des fibres ou d'un alliage léger de NE ou d'acier inoxydable à paroi mince.

14. Dispositif de serrage (1) selon la revendication 11, **caractérisé en ce que** la butée (12) est réalisée de manière réglable, la butée (12) étant réalisée de préférence avec un filetage et la goupille transversale (11) étant réalisée avec un filetage conjugué et la butée étant réalisée sous forme d'écrou (12) ou de vis, de préférence avec une denture périphérique (21) et/ou un peigne et/ou une rainure pour l'engagement d'un outil de réglage.

15. Bâton, en particulier bâton de marche, bâton de randonnée, bâton de marche nordique, bâton de ski de fond ou bâton de ski comprenant un dispositif de serrage (1) selon l'une quelconque des revendications précédentes, en particulier de préférence pour le réglage en longueur d'au moins deux portions tubulaires (2, 3) ou de trois portions tubulaires, la portion de tube intérieur (3) devant être serrée par le dispositif de serrage étant de préférence réalisée de manière non fendue.
